(19) Europäisches Patentamt / European Patent Office / Office européen des brevets

(11) EP 4 574 781 A1

## (12) EUROPEAN PATENT APPLICATION

(43) Date of publication:
25.06.2025 Bulletin 2025/26

(21) Application number: 24217819.2

(22) Date of filing: 05.12.2024

(51) International Patent Classification (IPC):
*C03B 17/04* (2006.01)

(52) Cooperative Patent Classification (CPC):
C03B 17/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.12.2023 EP 23219626

(71) Applicant: SCHOTT AG
55122 Mainz (DE)

(72) Inventors:
• TRINKS, Volker
95666 Mitterteich (DE)
• LANGE, Ulrich
55122 Mainz (DE)

(74) Representative: Schott Corporate IP
Hattenbergstraße 10
55122 Mainz (DE)

(54) **DRAWING HEAD FOR PRODUCING A GLASS TUBE, APPARATUS FOR PRODUCING A GLASS TUBE, PROCESS FOR PRODUCING A GLASS TUBE VIA A DRAWING PRO-CESS, AND GLASS TUBE**

(57) This disclosure relates to a drawing head for producing a glass tube and an apparatus comprising the drawing head. This disclosure further relates to a process for producing a glass tube via a drawing process. The geometry and dimensions of the drawing head are designed in such a way that no streaks impairing the quality of the glass tubes are formed in a process according to this disclosure.

Figure 1

EP 4 574 781 A1

**Description**

This disclosure relates to a drawing head for producing a glass tube and an apparatus comprising the drawing head. This disclosure further relates to a process for producing a glass tube via a drawing process. The geometry and dimensions of the drawing head are designed in such a way that no streaks impairing the quality of the glass tubes are formed in a process according to this disclosure.

Background

The Vello process is known for the production of glass tubes. It is a vertical drawing process in which the viscous glass melt is drawn off downward through a ring die. The glass melt is fed from a melting tank via a feeder channel or duct. At the end of the feeder channel, there is a cylindrical opening at the bottom with a nozzle through which the melt can flow out via a vertical cone, also called a drawing needle, which is adjustable in height and laterally and widens downward in the shape of a funnel. The cone is hollow and is connected to blowing air via an extension tube. As a result, the glass mass flowing around the valve body is kept open and can be drawn off as a glass tube downwards into a temperature-controlled shaft before it is deflected in freely suspended fashion or with the aid of a guide into a horizontal direction and drawn off by a drawing machine.

The down-draw process, which is also commonly used, is similar, with the difference that the formed glass tube is not deflected horizontally but is drawn off directly vertically downwards.

The end section of the feeder channel with the opening through which the glass melt is drawn off as a glass tube is often called the feeder head or drawing head. The above-mentioned vertical cone, i.e., the drawing needle, can be used to close the glass outlet of a drawing head which is intended for drawing glass tubes. The drawing needle is held and moved by a cylindrical extension, i.e., the needle shaft. The needle shaft protrudes from the drawing head at the upper open end. Before the glass melt leaves the drawing head via the glass outlet, it flows around the shank of the drawing needle, forming a so-called looping streak in the glass melt. A streak which may form in the glass is a chemical inhomogeneity that has a slightly different refractive index which differs from the base glass. A strongly pronounced streak can be seen with the naked eye, especially if the streak is located on the glass surface. It is also possible to make streaks visible in micrographs taken from cut cross sections of the glass tube.

DE 10 2008 009 811 A1 discloses a method for controlling and monitoring the temperature in the manufacture of glass tubes using the Vello or down-draw process. In this method a glass melt is introduced into a glass tube needle cell and metered through a nozzle ring onto a metering-drawing needle, wherein the metering-drawing needle is heated with its conical glass tube forming body. The wall of the metering-drawing needle with the connected glass tubular forming body consists of an electrically conductive material, wherein the heating is effected by current flow in the electrically conductive wall material. DE 10 2008 009 811 A1 also discloses a related device for controlling and monitoring the temperature in the manufacture of glass tubes using the Vello or down-draw process. Both the method and the device allow preventing devitrification which would manifest itself in the form of streaks on the glass tubes.

US 2017/0320766 A1 discloses bell assembly apparatuses with enhanced thermal dimensional stability that provide reduced siding loss during the production of glass tubing, and glass tubing forming apparatuses which incorporate bell assembly apparatuses with enhanced thermal dimensional stability such that undesired movement of bells within delivery orifices of glass delivery tanks due to thermal variation across the bell assembly apparatuses during glass tubing production is reduced.

US 2017/0341966 A1 discloses heating apparatuses and methods for glass tubing manufacturing. The heating apparatus includes a bowl configured to receive molten glass and a plurality of heating elements thermally coupled to the bowl, wherein the bowl includes a tub portion configured to hold the molten glass, a bowl well extending beneath the tub portion, and an orifice at a distal end of the bowl well. The plurality of heating elements include a first heating element disposed at a first vertical location along the bowl height, a second heating element disposed at a second vertical location along the bowl height, wherein the first vertical location is vertically spaced apart from the second vertical location. The heating apparatus is used to heat the molten glass as the molten glass flows from the tub portion through the bowl well and out of the orifice. The heating apparatus is configured to maintain thermal homogeneity of the molten glass exiting the orifice which mitigates variation in tube dimensions and instability in the glass tube manufacturing process.

A streak propensity of the glass undergoes a particular orientation as a result of the glass melt flowing around the needle shaft and is therefore visible as a looping streak. In the prior art it has been assumed that the looping streak is formed within the drawing head due to rejoining glass melt portions after passing the needle shaft in a stationary area and manifests itself as a streak in the manufactured glass tubes at a relatively stationary position with respect to their position relative to the forming components. If a glass tube is marked in such a way that its position can be traced as it flows out of the drawing head, the streak is found on a side of the glass tube surface which is opposite to the side of the glass inlet flow as it leaves the head. It was previously speculated that streaks forming on the surface of a drawn glass tube may be prevented by using a laterally positioned head overflow to draw off the affected portion of glass melt. This approach was however insufficient to sufficiently avoid the formation of streaks on the glass tube surface.

Drawing glass tubes with the known drawing heads, a so-called head overflow is used to suppress the formation of a looping streak in the glass melt and to thus prevent or at least mitigate the formation of streaks on the surface of the manufactured glass tubes. The glass melt drawn off via the head overflow is thereby no longer available for product manufacture, which reduces the overall yield and increases production costs.

The object of the present disclosure is to provide an apparatus and a method for increased prevention of the formation of visible streaks during the manufacture of a glass tube.


Summary of the Disclosure

The described object is solved by the subject-matter of this disclosure.

In one aspect, this disclosure provides a drawing head (1) for producing a glass tube, wherein the drawing head (1) comprises a glass inlet (2) for receiving a glass melt and a glass outlet (4) for discharging the glass melt, the drawing head (1) having a total height h and an inner diameter d, characterized by one or more of the following features:

- the drawing head (1) further comprising a head overflow (5), wherein a central axis of the head overflow (5) is arranged vertically above a central axis of the glass inlet (2) by a vertical distance $v$, characterized in that a ratio $v/h$ is at least 0.05/1, or at least 0.1/1;

- the drawing head (1) having a vertical distance c between the glass outlet (4) and a central axis of the glass inlet (2), characterized in that a ratio c/h is from 0.2/1 to 0.8/1, more preferably the ratio c/h is from 0.4/1 to 0.6/1 or alternatively from 0.2/1 to 0.4/1;

- the drawing head (1) having a filling height of the glass melt $h_{melt}$ between a glass melt level (6) and a central axis of the glass inlet (2), when in operation, characterized in that a ratio $h_{melt}/h$ is at least 0.1/1, or at least 0.2/1. Filling height of the glass melt $h_{melt}$ being the distance between the glass melt level (6) and the central axis of the glass inlet (2). In other words, the drawing head being configured to have a filling height of the glass melt $h_{melt}$, i.e. a distance between a glass melt level (6) and a central axis of the glass inlet (2), when in operation, characterized in that a ratio $h_{melt}/h$ is at least 0.1/1, or at least 0.2/1.

In a first aspect, this disclosure provides a drawing head (1) for producing a glass tube, wherein the drawing head (1) comprises a glass inlet (2) for receiving a glass melt and a glass outlet (4) for discharging the glass melt, the drawing head (1) having a total height h and an inner diameter d, the drawing head (1) further comprising a head overflow (5), wherein a central axis of the head overflow (5) is arranged vertically above a central axis of the glass inlet (2) by a vertical distance $v$, characterized in that a ratio $v/h$ is at least 0.05/1, or at least 0.1/1.

In a second aspect, this disclosure provides a drawing head (1) for producing a glass tube, wherein the drawing head (1) comprises a glass inlet (2) for receiving a glass melt and a glass outlet (4) for discharging the glass melt, the drawing head (1) having a total height h and an inner diameter d, the drawing head (1) having a vertical distance c between the glass outlet (4) and a central axis of the glass inlet (2), characterized in that a ratio c/h is from 0.2/1 to 0.8/1, more preferably the ratio c/h is from 0.4/1 to 0.6/1 or alternatively from 0.2/1 to 0.4/1.

In a third aspect, this disclosure provides a drawing head (1) for producing a glass tube, wherein the drawing head (1) comprises a glass inlet (2) for receiving a glass melt and a glass outlet (4) for discharging the glass melt, the drawing head (1) having a total height h and an inner diameter d, the drawing head (1) having a filling height of the glass melt $h_{melt}$ between a glass melt level (6) and a central axis of the glass inlet (2), when in operation, characterized in that a ratio $h_{melt}/h$ is at least 0.1/1, or at least 0.2/1.

In a fourth aspect, this disclosure provides an apparatus for producing a glass tube comprising a drawing head (1) according to this disclosure and a drawing needle (3).

In a related aspect, this disclosure provides a process for producing a glass tube via a drawing process, comprising the step of passing a glass melt through an apparatus according to this disclosure, wherein the process optionally comprises a subsequent hot forming step.

Surprisingly, it was found that adaptations in the geometrical design of the drawing head can influence the convectional flow within the glass melt, with the result that the looping streak is no longer visible as a streak on the product. This result was also found at a greatly reduced glass discharge at the head overflow or without operating the head overflow. In the drawing heads according to this disclosure, the flow of the glass melt in the drawing head is changed in such a way that the streak is displaced into the manufactured product, which is thus no longer present on the surface and is no longer visible on the product.

In a fifth aspect, this disclosure provides a glass tube, wherein for any rotational position of a 3 mm thick glass tube sample in a chromatic confocal thickness measurement both the outer surface line profile and the inner surface line profile have a maximum 2D slope angle of less than 20,000 arcsec and/or a maximum total wavefront error of less than 25 $\mu$m based on measuring cursors having a width of 360 $\mu$m shifted along the entire length of the outer surface line profile and of the inner surface line profile in increments of 180 $\mu$m, wherein both the outer surface line profile and the inner surface line profile have a length of 4500 $\mu$m.

Detailed Description of the Disclosure

**Drawing head**

In a first aspect, this disclosure provides a drawing head for producing a glass tube, wherein the drawing head comprises a glass inlet for receiving a glass melt and a glass outlet for discharging the glass melt, the drawing head having a total height h and an inner diameter d, the drawing head further comprising a head overflow, wherein a central axis of the head overflow is arranged vertically above a central axis of the glass inlet by a vertical distance v, characterized in that a ratio *v/h* is at least 0.05/1, or at least 0.1/1.

In a second aspect, this disclosure provides a drawing head for producing a glass tube, wherein the drawing head comprises a glass inlet for receiving a glass melt and a glass outlet for discharging the glass melt, the drawing head having a total height h and an inner diameter d, the drawing head having a vertical distance c between the glass outlet and a central axis of the glass inlet, characterized in that a ratio *c/h* is from 0.2/1 to 0.8/1, more preferably the ratio *c/h* is from 0.4/1 to 0.6/1 or alternatively from 0.2/1 to 0.4/1.

In a third aspect, this disclosure provides a drawing head for producing a glass tube, wherein the drawing head comprises a glass inlet for receiving a glass melt and a glass outlet for discharging the glass melt, the drawing head having a total height h and an inner diameter d, the drawing head having a filling height of the glass melt $h_{melt}$ between a glass melt level and a central axis of the glass inlet, when in operation, characterized in that a ratio $h_{melt}/h$ is at least 0.1/1, or at least 0.2/1.

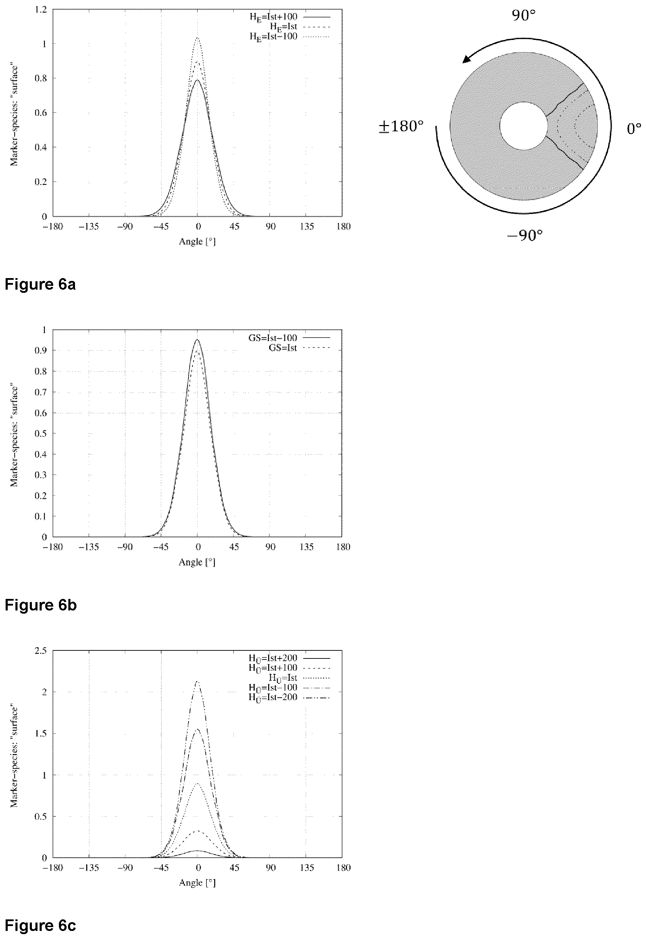

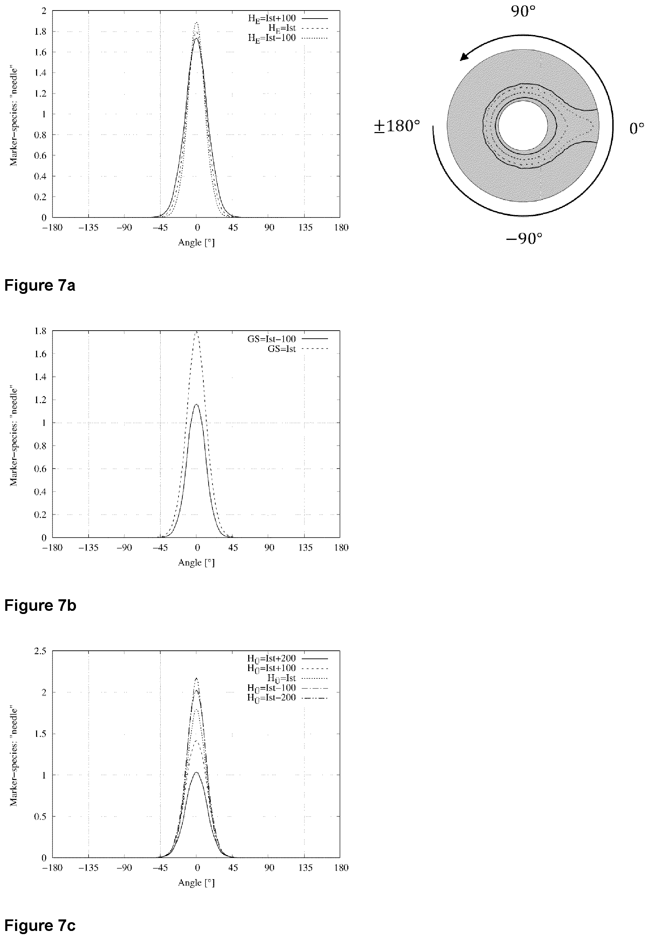

Without being bound by theory, by means of simulations (cf. Figure 6c and Figure 7c) it has been found that the presence of a head overflow which is arranged vertically above a central axis of the glass inlet by a vertical distance *v* with a ratio *v/h* of at least 0.05/1 reduces or even completely avoids the formation of visible streaks during the manufacture of a glass tube.

Without being bound by theory, by means of simulations (cf. Figure 6a and Figure 7a) it has been found that the position of the glass inlet with respect to the total height h of the drawing head has an influence on reducing and/or avoiding the formation of visible streaks during the manufacture of a glass tube, when the vertical distance c satisfies a ratio c/h from 0.2/1 to 0.8/1.

Without being bound by theory, by means of simulations (cf. Figure 6b and Figure 7b) it has been found that a filling height of the glass melt $h_{melt}$ between the glass melt level and the central axis of the glass inlet, when in operation, contributes to reducing and/or avoiding the formation of visible streaks during the manufacture of a glass tube, provided that a ratio $h_{melt}/h$ is at least 0.1/1.

The described features relating the ratio *v/h* of at least 0.05/1, the ratio *c/h* from 0.2/1 to 0.8/1, and the ratio $h_{melt}/h$ of at least 0.1/1 may each be realised alone or in any combination with each other to reduce and/or avoid the formation of visible streaks during the manufacture of a glass tube. It shall be understood that that the lower limit of the ratio *v/h,* the range for the ratio *c/h,* and and the lower limit of the ratio $h_{melt}/h$ shall not be interpreted in a way that leads to physically non-sensible geometric constraints on the drawing head.

In one embodiment, the ratio *v/h* is at least 0.05/1, or at least 0.075/1, or at least 0.1/1, or at least 0.125/1, or at least 0.15/1. In one embodiment, the ratio *v/h* is 0.3/1 or less, or 0.275/1 or less, or 0.25/1 or less, or 0.225/1 or less, or 0.2/1 or less. In one embodiment, the ratio *v/h* is from 0.05/1 to 0.3/1, or from 0.075/1 to 0.275/1, or from 0.1/1 to 0.25/1, or from 0.125/1 to 0.225/1, or from 0.15/1 to 0.2/1.

In one embodiment, the ratio *c/h* is from 0.2/1 to 0.8/1, more preferably the ratio *c/h* is from 0.4/1 to 0.6/1, or alternatively from 0.2/1 to 0.4/1. In one embodiment, the ratio c/h is from 0.4/1 to 0.6/1, or from 0.425/1 to 0.575/1, or from 0.45/1 to 0.55/1, or from 0.475/1 to 0.525/1. In one embodiment, the ratio c/h is from 0.2/1 to 0.4/1, or from 0.225/1 to 0.375/1, or from 0.25/1 to 0.35/1, or from 0.275/1 to 0.325/1. In one embodiment, the ratio c/h is 0.2/1 or more, or 0.225/1 or more, or 0.25/1 or more, or 0.275/1 or more, or 0.3/1 or more, or 0.325/1 or more, or 0.35/1 or more, or 0.375/1 or more, or 0.4/1 or more, or 0.425/1 or more, or 0.45/1 or more, or 0.475/1 or more. In one embodiment, the ratio c/h is 0.8/1 or less, or 0.7/1 or less, or 0.6/1 or less, or 0.575/1 or less, or 0.55/1 or less, or 0.525/1 or less, or 0.5/1 or less, or 0.475/1 or less, or 0.45/1 or less, or 0.425/1 or less, or 0.4/1 or less, or 0.375/1 or less, or 0.35/1 or less, or 0.325/1 or less.

In one embodiment, the ratio $h_{melt}/h$ is at least 0.1/1, or at least 0.15/1, or at least 0.2/1, or at least 0.25/1, or at least 0.3/1, or at least 0.35/1, or at least 0.4/1. In one embodiment, the ratio $h_{melt}/h$ is 0.7/1 or less, or 0.65/1 or less, or 0.6/1 or less, or 0.55/1 or less, or 0.5/1 or less, or 0.45/1 or less, or 0.4/1 or less. In one embodiment, the ratio $h_{melt}/h$ is from 0.1/1 to 0.7/1, or 0.15/1 to 0.65/1, or from 0.2/1 to 0.6/1, or 0.25/1 to 0.55/1, or from 0.3/1 to 0.5/1, or 0.35/1 to 0.45/1. In an alternative embodiment, the ratio $h_{melt}/h$ is from 0.1/1 to 0.5/1, or from 0.15/1 to 0.45/1, or from 0.2/1 to 0.4/1, or from 0.25/1 to 0.35/1.

In one embodiment, the ratio h/d is from 2/1 to 7/1, or from 2.5/1 to 6.5/1, or from 3/1 to 6/1, or from 3.5/1 to 5.5/1. In one embodiment, the ratio h/d is from 3/1 to 4.5/1. In one embodiment, the ratio h/d is 2/1 or more, or 2.5/1 or more, or 3/1 or more, or 3.5/1 or more. In one embodiment, the ratio h/d is 7/1 or less, or 6.5/1 or less, or 6/1 or less, or 5.5/1 or less, or 5/1 or less, or 4.5/1 or less.

In one embodiment, the ratio $d_{i,inlet}/d_{i,overflow}$ is between 5/1 and 1.5/1, or between 4/1 and 1.75/1, or between 3/1 and 2/1. In one embodiment, the ratio $d_{i,inlet}/d_{i,overflow}$ is from 5/1 to 1.5/1, or from 4/1 to 1.75/1, or from 3/1 to 2/1. In one embodiment, the ratio $d_{i,inlet}/d_{i,overflow}$ is 1.5/1 or more, or 1.75/1 or more, or 2.0/1 or more. In one embodiment, the ratio $d_{i,inlet}/d_{i,overflow}$ is 5/1 or less, or 4/1 or less, or 3/1 or less.

In one embodiment, the inner diameter of the glass inlet $d_{i,inlet}$ is from 100 mm to 250 mm, or from 110 mm to 240 mm, or from 120 mm to 230 mm. In one embodiment, the inner diameter of the glass inlet $d_{i,inlet}$ is 100 mm or more, or 110 mm or more, or 120 mm or more. In one embodiment, the inner diameter of the glass inlet $d_{i,inlet}$ is 250 mm or less, or 240 mm or less, or 230 mm or less.

In one embodiment, the inner diameter of the head overflow $d_{i,overflow}$ is from 30 mm to 100 mm, or from 40 mm to 90 mm, or from 50 mm to 80 mm, or from 60 mm to 80 mm, or from 70 mm to 80 mm. In one embodiment, the inner diameter of the head overflow $d_{i,overflow}$ is 30 mm or more, or 40 mm or more, or 50 mm or more, or 60 mm or more, or 70 mm or more. In one embodiment, the inner diameter of the head overflow $d_{i,overflow}$ is 100 mm or less, or 90 mm or less, or 80 mm or less.

In one embodiment, the inner diameter d is between 120 and 400 mm, or between 135 and 350 mm, or between 150 and 300 mm. In one embodiment, the inner diameter d is from 120 to 400 mm, or from 135 to 350 mm, or from 150 to 300 mm. In one embodiment, the inner diameter d is 120 mm or more, or 135 mm or more, or 150 mm or more. In one embodiment, the inner diameter d is 400 mm or less, or 350 mm or less, or 300 mm or less.

In one embodiment, the total height h of the drawing head is from 600 mm to 1100, or from 700 mm to 1000, or from 800 mm to 950. In alternative embodiments, the total height h of the drawing head is from 600 mm to 900 mm, or from 700 mm to 1100 mm. In one embodiment, the total height h of the drawing head is 600 mm or more, or 700 mm or more, or 800 mm or more. In one embodiment, the total height h of the drawing head is 1100 mm or less, or 1000 mm or less, or 950 mm or less.

In one embodiment, the vertical distance c is from 150 mm to 700 mm, or from 200 mm to 600 mm, or from 300 mm to 550 mm. In alternative embodiments, the vertical distance c is from 150 mm to 300 mm, or from 350 mm to 550 mm. In one embodiment, the vertical distance c is 150 mm or more, or 200 mm or more, or 250 mm or more, or 300 mm or more, or 350 mm or more. In one embodiment, the vertical distance c is 700 mm or less, or 600 mm or less, or 550 mm or less, or 300 mm or less.

In one embodiment, the vertical distance v is at least 35 mm, or at least 50 mm, or at least 75 mm, or at least 100 mm, or at least 125 mm, or at least 150 mm. In one embodiment, the vertical distance v is 300 mm or less, or 275 mm or less, 250 mm or less, or 225 mm or less, or 200 mm or less. In one embodiment, the vertical distance v is from 35 mm to 300 mm, or from 50 mm to 275 mm, or from 75 mm to 250 mm, or from 100 mm to 225 mm, or from 125 mm to 200 mm, or from 150 mm to 200 mm.

Noble metal lining of the drawing head

In one embodiment, the drawing head further comprises an inner wall. In one embodiment, the inner wall of the drawing head, which during use contacts a glass melt, may at least partially comprise a noble metal lining. In one embodiment, the noble metal lining can comprise platinum or a platinum alloy, e.g., a platinum-iridium alloy or a platinum-rhodium alloy. In one embodiment, the inner wall of the drawing head, can be provided completely or at least partially with a noble metal lining at the surface areas which come into contact with the glass melt. Platinum sheets or sheets made of platinum alloys are suitable as a noble metal lining for this purpose. On the one hand this means prevents contact between the glass melt and the material of the inner wall of the drawing head, which is commonly made of refractory materials. On the other hand contamination of the glass melt is thereby avoided. Additionally, the lifespan of the drawing head comprising a noble metal lining is increased.

In one embodiment, the noble metal lining has a thickness of 0.5 mm to 2 mm, or 0.8 mm to 1.2 mm. In one embodiment, the noble metal lining comprises or consist of platinum or a platinum alloy, wherein the platinum or platinum alloy has a thickness of 0.8 mm to 1.2 mm.

In one embodiment, the noble metal lining can comprise connections for electrical heating and may be directly heated using an electrical current flowing through the noble metal lining. In one embodiment, the noble metal lining may be divided into segments which may be heated and controlled separately, resulting in the following advantages:

1. The heating may be divided into individual zones and can thus be controlled zonally and very precisely.

2. The implementation of rapid temperature changes is possible.

3. Temperatures can be changed rapidly over a wide temperature range spanning several hundred degrees centigrade.

4. Replacement of the drawing head or drawing head tools is possible within a few hours.

The drawing head according to this disclosure can be particularly preferable for processing aluminosilicate glasses and borosilicate glasses, which are melted at very high temperatures and thus require high effort and high costs. The drawing head according to this disclosure can achieve an increase in the directly usable glass melt quantity by approximately one fifth to one quarter which makes a process for producing a glass tube via a drawing process using the apparatus according to this disclosure very economical.

The drawing head according to this disclosure may be embedded in a steel construction which is further mounted in and surrounded by insulating brick. Mounting the drawing head in insulating brick is advantageous and avoids short circuits during electrical heating.

Further embodiments

In one embodiment, this disclosure provides a drawing head for producing a glass tube, wherein the drawing head comprises a glass inlet for receiving a glass melt and a glass outlet for discharging the glass melt, the drawing head having a total height h and an inner diameter d, the drawing head further comprising a head overflow, wherein a central axis of the head overflow is arranged vertically above a central axis of the glass inlet by a vertical distance v, characterized in that a ratio $v/h$ is from 0.05/1 to 0.3/1, or from 0.1/1 to 0.25/1.

In one embodiment, this disclosure provides a drawing head for producing a glass tube, wherein the drawing head comprises a glass inlet for receiving a glass melt and a glass outlet for discharging the glass melt, the drawing head having a total height h and an inner diameter d, wherein the drawing head has a vertical distance c between the glass outlet and a central axis of the glass inlet, with a ratio c/h from 0.4/1 to 0.6/1.

In one embodiment, this disclosure provides a drawing head for producing a glass tube, wherein the drawing head comprises a glass inlet for receiving a glass melt and a glass outlet for discharging the glass melt, the drawing head having a total height h and an inner diameter d, wherein the drawing head has a vertical distance c between the glass outlet and a central axis of the glass inlet, with a ratio c/h from 0.2/1 to 0.4/1.

In one embodiment, this disclosure provides a drawing head for producing a glass tube, wherein the drawing head comprises a glass inlet for receiving a glass melt and a glass outlet for discharging the glass melt, the drawing head having a total height h and an inner diameter d, wherein the drawing head has a filling height of the glass melt $h_{melt}$ between a glass melt level and a central axis of the glass inlet, when in operation, characterized in that a ratio $h_{melt}/h$ is from 0.1/1 to 0.7/1, or from 0.1/1 to 0.5/1.

In one embodiment, this disclosure provides a drawing head for producing a glass tube, wherein the drawing head comprises a glass inlet for receiving a glass melt and a glass outlet for discharging the glass melt, the drawing head having a total height h and an inner diameter d, the drawing head further comprising a head overflow, wherein a central axis of the head overflow is arranged vertically above a central axis of the glass inlet by a vertical distance v, characterized in that a ratio $v/h$ is from 0.05/1 to 0.3/1, wherein the drawing head has a vertical distance c between the glass outlet and a central axis of the glass inlet, with a ratio c/h from 0.4/1 to 0.6/1, or alternatively a ratio c/h from 0.2/1 to 0.4/1.

In one embodiment, this disclosure provides a drawing head for producing a glass tube, wherein the drawing head comprises a glass inlet for receiving a glass melt and a glass outlet for discharging the glass melt, the drawing head having a total height h and an inner diameter d, wherein the drawing head has a vertical distance c between the glass outlet and a central axis of the glass inlet, wherein the total height h is from 600 mm to 1100, wherein the inner diameter d is between 120 and 400 mm, and wherein the vertical distance c is from 150 mm to 700 mm, wherein the drawing head optionally comprises a head overflow with a ratio $v/h$ from 0.05/1 to 0.3/1.

In one embodiment, this disclosure provides a drawing head for producing a glass tube, wherein the drawing head comprises a glass inlet for receiving a glass melt and a glass outlet for discharging the glass melt, the drawing head having a total height h and an inner diameter d, wherein the drawing head has a vertical distance c between the glass outlet and a central axis of the glass inlet, wherein the total height h is from 700 mm to 1000, wherein the inner diameter d is between 120 and 400 mm, and wherein the vertical distance c is from 150 mm to 700 mm, wherein the drawing head optionally comprises a head overflow with a ratio $v/h$ from 0.05/1 to 0.3/1.

In one embodiment, this disclosure provides a drawing head for producing a glass tube, wherein the drawing head comprises a glass inlet for receiving a glass melt and a glass outlet for discharging the glass melt, the drawing head having a total height h and an inner diameter d, wherein the drawing head has a vertical distance c between the glass outlet and a central axis of the glass inlet, wherein the total height h is from 600 mm to 1100, wherein the inner diameter d is between 150 and 300 mm, and wherein the vertical distance c is from 150 mm to 700 mm, wherein the drawing head optionally comprises a head overflow with a ratio $v/h$ from 0.05/1 to 0.3/1.

(4) In one embodiment, this disclosure provides a drawing head for producing a glass tube, wherein the drawing head comprises a glass inlet for receiving a glass melt and a glass outlet for discharging the glass melt, the drawing head having a total height h and an inner diameter d, wherein the drawing head has a vertical distance c between the glass outlet and a central axis of the glass inlet, wherein the total height h is from 600 mm to 1100, wherein the inner diameter d is between 120 and 400 mm, and wherein the vertical distance c is from 150 mm to 300 mm, or the vertical distance c is from 350 mm to 550 mm, wherein the drawing head optionally comprises a head overflow with a ratio *v/h* from 0.05/1 to 0.3/1.

**Apparatus**

In a fourth aspect, this disclosure provides an apparatus for producing a glass tube comprising a drawing head according to this disclosure and a drawing needle.

In one embodiment of the apparatus, a distance a between the drawing needle and an inner wall of the drawing head is in the range from 40 to 300 mm, more preferably the distance a is in the range from 50 to 150 mm. In one embodiment, the distance a is 40 mm or more, or 50 mm or more, or 60 mm or more, or 70 mm or more, or 80 mm or more. In one embodiment, the distance a is 300 mm or less, or 150 mm or less, or 140 mm or less, or 130 mm or less, or 100 mm or less.

In this disclosure, the distance a between the drawing needle and an inner wall can be understood as a position-dependent distance between any point on the surface of the needle shaft and the inner wall, which distance is measured within a horizontal plane and in a radial direction emanating from the horizontal axis of rotation of the needle shaft. The needle shaft may be oriented such that its axis of rotation is shifted with respect to the rotational axis of the drawing head which provides that the position-dependent distance a between the drawing needle and an inner wall may result in a sinusoidal functional behaviour along the outer circumference of the drawing needle. It may be advantageous to position the needle shaft such that its axis of rotation is shifted with respect to the rotational axis of the drawing head in order to account for and/or mitigate viscosity differences within the glass melt. In one embodiment, the needle shaft can be oriented such that its axis of rotation is congruent to the rotational axis of the drawing head.

In one embodiment, the drawing needle has a shaft diameter s from 30 mm to 70 mm, or from 40 mm to 60 mm, or from 45 mm to 55 mm.

**Process**

In a related aspect, this disclosure provides a process for producing a glass tube via a drawing process, comprising the step of passing a glass melt through an apparatus according to this disclosure, wherein the process optionally comprises a subsequent hot forming step.

In one embodiment of the process, the drawing head comprises a head overflow, characterized in that an amount of glass melt drawn off via the head overflow is less than 10%, preferably less than 5%, of the amount of glass melt fed into the drawing head via the glass inlet. In one embodiment, the amount of glass melt drawn off via the head overflow is 0% or more, or 0.5% or more, or 1.0% or more, or 2.0% or more. In one embodiment, the amount of glass melt drawn off via the head overflow is from 0% to 10%, or from 0.5% to 10%, or from 1.0% to 5%, or from 2.0% to 5%. The process according to this disclosure may be controlled in such a way to draw off glass melt via the head overflow, if present, which may contribute to reducing and/or avoiding the formation of visible streaks during the manufacture of a glass tube. The amount of glass melt drawn off via the head overflow may be advantageously adjusted in combination with the geometric parameters of the apparatus according to this disclosure.

In one embodiment of the process, the amount of glass melt discharged via the glass outlet for drawing glass tubes is substantially equal to an amount of glass melt received via the glass inlet. It is of advantage to control the process in such a way to strongly reduce or even avoid the loss of glass melt. In certain embodiments, the presence of a head overflow is either not necessary, or the amount of glass melt drawn off via the head overflow is near 0%.

In one embodiment of the process, a process temperature of the glass melt in the drawing head is substantially set, preferably controlled, by electrical heating of the noble metal lining of the drawing head. Because the noble metal lining of the drawing head is based on an electrically conductive material, whereas the mounting of the drawing head in insulating brick avoids short circuits, electrical heating becomes possible. Because the glass melt is essentially entirely surrounded by the drawing head, effective and homogenous electrical heating may be provided.

In one embodiment of the process, a filling height of the glass melt $h_{melt}$ between a glass melt level and a central axis of the glass inlet has a ratio $h_{melt}/h$ of at least 0.1/1, or at least 0.2/1, with the proviso that the glass melt level is between h - 100 mm and *h*, with respect to the total height h of the drawing head.

In one embodiment of the process, the ratio $h_{melt}/h$ is at least 0.1/1, or at least 0.15/1, or at least 0.2/1, or at least 0.25/1, or at least 0.3/1, or at least 0.35/1, or at least 0.4/1. In one embodiment of the process, the ratio $h_{melt}/h$ is 0.7/1 or less, or 0.65/1 or less, or 0.6/1 or less, or 0.55/1 or less, or 0.5/1 or less, or 0.45/1 or less, or 0.4/1 or less. In one embodiment of the process, the ratio $h_{melt}/h$ is from 0.1/1 to 0.7/1, or 0.15/1 to 0.65/1, or from 0.2/1 to 0.6/1, or 0.25/1 to 0.55/1, or from 0.3/1 to 0.5/1, or 0.35/1 to 0.45/1. In an alternative embodiment of the process, the ratio $h_{melt}/h$ is from 0.1/1 to 0.5/1, or from 0.15/1 to 0.45/1, or from 0.2/1 to 0.4/1, or from 0.25/1 to 0.35/1.

**Glass tube**

If any streaks are present at all in the glass tubes of the present disclosure, the streaks are only found inside the tube and do not appear on the outer surface (11) or the inner surface (12) of the glass tubes. This can be determined in a quantitative manner by a chromatic confocal thickness measurement on tube segments of the glass tube.

Chromatic confocal thickness measurement

In chromatic confocal thickness measurements, a white light source is used to guide the light to the measuring head with an optical fiber. The measuring head contains a lens system with a pronounced longitudinal defect, thus creating a chromatic aberration. The light, with its wavelength-dependent foci, then hits the test specimen. A wavelength is precisely focused and produces a sharp image. The reflected light is transported via the fiber to a calibrated spectrometer. A spectrometer is a device for the wavelength-dependent determination of intensities. A sharp peak with maximum intensity is generated at the discrete wavelength currently in focus. Calibration allows each discrete wavelength to be assigned a discrete distance value.

The thickness measurement corresponds to two distance measurements, since there are two interfaces in the measuring range. The prerequisite for this is that the sample is transparent to the light used. The front side of the sample is the first interface, and the back side of the sample is the second interface. At each of the two interfaces, a reflection is generated and thus an intensity peak in the spectrum. If the optical properties of the sample, refractive index and Abbe number, are known and homogeneous over the measured area, the thickness (z-value) can be calculated from the difference between the two distance measurements.

Assuming that the absolute thickness is also constant, the z-value determined is a measure of the wavefront deformation. This assumption can be made for example if the sample is polished on both sides to a predetermined thickness, in particular to a thickness of 3 mm. To verify that there is no wedge shape, the topography of both sides of the sample is measured.

This technique can be used for visualizing streaks in a glass tube in a quantitative manner. Streaks are optical disturbances that result in quantifiable wavefront deformations that can be detected by chromatic confocal thickness measurements. Glass tubes are rather specific in terms of their geometry so that special measures are required for the measurement. The measurement is done on tube segments having a thickness of 3 mm. Wavefront deviations are visible as apparent thickness variations in the measurement. For the measurement, the sample (tube segment) is clamped in a three-jaw holder, the front face of the sample facing the sensor. The sample is measured by scanning it in a meandering pattern (meander scan with (10x10) $\mu$m step size and (4500x2900) $\mu$m travel distance) resulting in measuring points defined by their position (x, y) on the tube segment and by the apparent thickness (z-value) corresponding to that position.

Due to the sample geometry and the geometry of the instrument, such a measurement generally provides measuring points only for a minor part of the sample, namely for a ring section covering only a fraction of the entire 360° sample depending on the geometry. Therefore, the sample is repeatedly rotated, for example in steps of 10° counterclockwise, and measured again and again to eventually cover the entire 360° sample after 35 rotations. Such a rotation scheme results in varying rotational positions of the sample. The initial rotational position of the sample may be referred to as the "12 o'clock position" or the "0° position". After the first rotation, the rotational position of the sample may be referred to as the "10° position". After the second rotation, the rotational position of the sample may be referred to as the "20° position" and so on until the "350° position" is reached after the 35th rotation. In such a manner, the wavefront deformation is measured for the entire sample based on 36 rotational positions thereof. Thus, based on measurements on the 36 rotational positions of the sample, the entire 360° sample is covered so that a z-value (wavefront deformation measured as apparent sample thickness) is provided for x-y-positions throughout the entire sample.

The step size of the rotation of the sample is chosen according to the size of the ring section covered by one measurement. In particular, the step size of the rotation is chosen to be smaller than the ring section covered by one measurement. For example, if one measurement covers 15° of the entire 360° sample, the step size of rotation may be chosen to be 10°. This ensures that no part of the sample remains unmeasured. That parts of the sample are measured twice in neighboring rotational positions is irrelevant to the outcome of the experiment because in the end the measurement aims at determining whether there are streaks at the outer surface or inner surface of the glass tube or not. If a streak is detected twice in neighboring rotational positions, this is not a problem. Rather, it is important that no streak is missed in the measurement.

Line profiles

The chromatic confocal thickness measurement results for each rotational position of the sample in measuring points representing the position of the measuring point on the sample as x-and y-coordinates and the corresponding wavefront deformation measured as apparent sample thickness as z-value. Thus, the data are 3-dimensional. 2D plots can be obtained by plotting the z-values against the x-coordinates for a fixed y-position. Respective 2D plots can also be referred to as "line profiles". In general, one line profile can be plotted for each y-position based on the experimental data obtained by the chromatic confocal thickness measurement. In such line profiles, the x-position is plotted on the x-axis and the wavefront deformation measured as apparent sample thickness is plotted on the y-axis. Line profiles having a length of 4500 $\mu$m are reasonable representations of the experimental data obtained for any given rotational sample position.

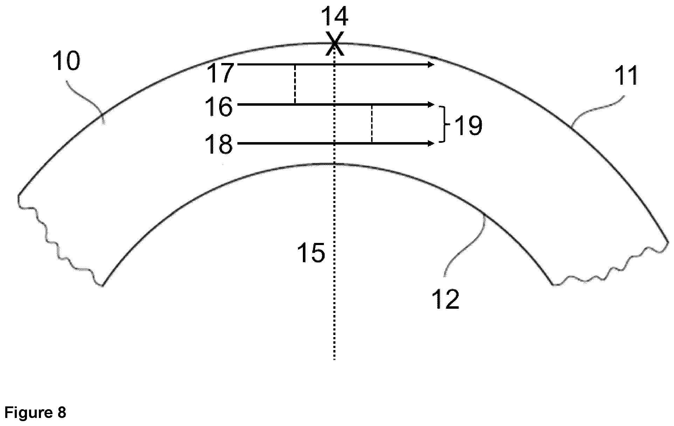

In some embodiments, the line profiles are straight lines, for example as exemplarily shown in Figure 8. This is particularly the case in embodiments in which the glass tubes are large enough regarding their diameters such that straight line profiles having a length of 4500 $\mu$m can be positioned within the measured sample area. However, the present disclosure is not restricted to such glass tubes. Rather, smaller glass tubes are also part of the disclosure. In some embodiments, the line profiles having a length of 4500 $\mu$m are curved, in particular adapted to the curvature of the sample, for example such that the line profiles are parallel to the outer surface and/or to the inner surface of the glass tubes.

In the present case, two line profiles are of particular interest, namely the outer surface line profile and the inner surface line profile. The reason is that streaks are particularly disadvantageous if they appear on the outer surface (11) or the inner surface (12) of the glass tubes. Thus, such streaks are desired to be identified. Streaks that are only found inside the tube are less relevant. Therefore, the outer surface line profile and the inner surface line profile are particularly relevant. If streaks are identified in one or both of these line profiles, the corresponding glass tube is disadvantageous. In contrast, if streaks are not identified in any of these two line profiles, there are at most streaks inside the glass tube which is generally not an issue.

Line profiles positioned directly at y-positions corresponding to the outer or inner surface of the glass tube are not suitable for determining presence or absence of streaks because the measurements are prone to produce artefacts in the vicinity of the interface of the sample with the surrounding. Therefore, the outer surface line profile and the inner surface line profile are determined based on the y-position of the center line profile.

The center line profile is positioned into the measured section of the glass tube sample, in particular as schematically shown in Figure 8. The center line profile is positioned below the vertex of the tube section, perpendicular to the radius at least at the intersection therewith. Straight center line profiles are perpendicular to the radius along their entire length. Curved center line profiles are perpendicular to the radius at the intersection therewith. The "radius" is the direct and straight connection of the vertex and the center of the tube segment. The center line profile is positioned symmetrically regarding both its x-positions and its y-position. Regarding its x-positions, the center line profile is positioned such that 2250 $\mu$m of the center line profile are "left" of the radius and 2250 $\mu$m are "right" of the radius. Regarding its y-position, the center line profile is positioned such that the distance of the center of the center line profile from the outer surface of the glass tube is equal to its distance from the inner surface of the glass tube measured along the radius.

The outer surface line profile is the line profile which is parallel to the center line profile and shifted towards the outer surface of the glass tube by 65% of the distance of the center of the center line profile from the outer surface of the glass tube measured along the radius. Likewise, the inner surface line profile is the line profile which is parallel to the center line profile and shifted towards the inner surface of the glass tube by 65% of the distance of the center of the center line profile from the inner surface of the glass tube measured along the radius. This ensures that the outer surface line profile and the inner surface line profile are close enough to the respective surfaces for giving meaningful results while at the same time they are sufficiently spaced apart from the direct interfaces of the glass tube with the surrounding to ensure absence of artefacts and thus sufficient data quality.

Data analysis

In order to decide based on a given line profile whether it includes a streak or not, it is necessary to analyze two parameters, namely the 2D slope angle and the total wavefront error. As streaks are local phenomena generally with extensions in x-direction of a few hundred micrometers, a global analysis of an entire line profile having a length of 4500 $\mu$m is not suitable for identification of streaks. Rather, shorter sections of the line profiles must be analyzed. For this purpose, measuring cursors having a width of 360 $\mu$m are shifted along the entire length of the line profiles in increments of 180 $\mu$m. The measuring cursors have a width of 360 $\mu$m. They are shifted along the entire length of the outer surface line profile and of the inner surface line profile in increments of 180 $\mu$m. Each of the respective line profiles has a length of 4500 $\mu$m. Thus, for each of the two line profiles there are 24 positions of the measuring cursor to cover the entire length, the first position covering the distance from 0 to 360 $\mu$m of the line profile, the second position covering the distance from 180 to 540 $\mu$m and so on until the last position covering the distance from 4140 $\mu$m to 4500 $\mu$m.

For each of the positions of the measuring cursor, the 2D slope angle and the total wavefront error (TWE) are determined. Thus, for each rotational position of the glass tube sample in the chromatic confocal thickness measurement, there are 24 values of the 2D slope angle and 24 values of the TWE. The maximum absolute value of the 2D slope angle and the maximum absolute value of the TWE can easily be determined among the respective values for each rotational position of the sample.

The outer surface line profile and the inner surface line profile of the present disclosure have a maximum absolute value of a 2D slope angle of less than 20,000 arcsec and/or a maximum absolute value of a total wavefront error of less than 25 $\mu$m. This ensures that there are no streaks on any of the outer and inner surfaces of the glass tube. Notably, a streak is only determined if both parameters exceed the indicated values. If only one of the parameters is higher, this is attributable to presence of artefacts. For example, a very steep change from lowest to highest apparent thickness within an interval determined by the measuring cursor is irrelevant if the maximum absolute value of the TWE at the respective rotational position of the glass tube sample is small.

For a given rotational position of the glass tube sample, the maximum absolute value of the 2D slope angle and the maximum absolute value of the TWE are generally found at the same position of the measuring cursor. Even where this is not the case, data analysis is not compromised. Streaks are reliably identified based on both the maximum absolute value of the 2D slope angle and the maximum absolute value of the TWE exceeding certain thresholds at a given rotational position of the glass tube sample, independent of both maximum values being based on the same position of the measuring cursor or not.

The TWE is the difference between the highest apparent thickness and the lowest apparent thickness determined by a given position of the measuring cursor. For example, a measuring cursor covering the x-positions from 720 $\mu$m to 1080 $\mu$m of the outer surface line profile at a rotational sample position of 60° may have a readout of apparent sample thickness in a range of from 2860.1 $\mu$m to 2862.2 $\mu$m depending on the x-position. The corresponding TWE would be the difference of 2862.2 $\mu$m and 2860.1 $\mu$m, i.e. TWE = 2.1 $\mu$m. For determining the TWE, the difference of maximum apparent thickness and minimum apparent thickness is calculated in the range of x-positions determined by the position of the measuring cursor on the line profile. As a smaller number is subtracted from a larger number, the TWE is always a positive number.

For a given rotational position of the glass tube sample, the maximum TWE of the outer surface line profile is the highest TWE among all 24 TWE values determined for the 24 different positions of the measuring cursor for this line profile. Likewise, the maximum TWE of the inner surface line profile is the highest TWE among all 24 TWE values determined for the 24 different positions of the measuring cursor for this line profile.

The 2D slope angle takes into account the steepness of the change from lowest to highest apparent thickness or *vice versa* within the interval determined by the position of the measuring cursor. The 2D slope angle is determined based on the TWE and the absolute value of the distance in x-direction of the x-positions of the corresponding maximum and minimum apparent thickness values. The 2D slope angle is a measure of the absolute value of the slope of a straight line connecting the corresponding minima and maxima.

TWE may also be written as $\Delta y = y_{max} - y_{min}$. The absolute value of the slope of a straight line connecting the corresponding minima and maxima is $\Delta y/\Delta x = (y_{max} - y_{min})/(x_{max} - x_{min})$, with $x_{max}$ being the x-position corresponding to $y_{max}$, and $x_{min}$ being the x-position corresponding to $y_{min}$, respectively.

For example, in the above discussed example of TWE being 2.1 $\mu$m, let us assume that $y_{max}$ of 2862.2 $\mu$m is at $x_{max}$ = 950 $\mu$m, and $y_{min}$ of 2860.1 $\mu$m is at $x_{min}$ = 980 $\mu$m. The absolute value of the slope is than 2.1 $\mu$m divided by 30 $\mu$m which is 0.07. An absolute slope of 0.07 approximately corresponds to a 2D slope angle of 4° because tan(4°) is about 0.07. Notably, a 2D slope angle of 4° is equal to 14,400 arcsec. As the absolute value of the slope is used for determining the 2D slope angle, the 2D slope angle is always a positive number.

For a given rotational position of the glass tube sample, the maximum 2D slope angle of the outer surface line profile is the highest 2D slope angle among all 24 values determined for the 24 different positions of the measuring cursor for this line profile. Likewise, the maximum 2D slope angle of the inner surface line profile is the highest 2D slope angle among all 24 values determined for the 24 different positions of the measuring cursor for this line profile.

<u>Glass tubes of the disclosure</u>

The glass tubes of the present disclosure are characterized by low values of the TWE and/or the 2D slope angle at any rotational position of the glass tube sample.

In a fifth aspect, this disclosure provides a glass tube, wherein for any rotational position of a 3 mm thick glass tube sample in a chromatic confocal thickness measurement both the outer surface line profile and the inner surface line profile have a maximum 2D slope angle of less than 20,000 arcsec and/or a maximum total wavefront error of less than 25 $\mu$m based on measuring cursors having a width of 360 $\mu$m shifted along the entire length of the outer surface line profile and of the inner surface line profile in increments of 180 $\mu$m, wherein both the outer surface line profile and the inner surface line profile have a length of 4500 $\mu$m. In some embodiments, the glass tube is produced or producible by the process of the invention.

In some embodiments, for any rotational position of a 3 mm thick glass tube sample in the chromatic confocal thickness measurement both the outer surface line profile and the inner surface line profile have a maximum 2D slope angle in a range of from 10 to <20,000 arcsec, for example from 20 to 15,000 arcsec, from 50 to 10,000 arcsec, from 100 to 7,500 arcsec, or from 125 to 5,000 arcsec, and/or a maximum TWE in a range of from 0.1 to <25 μm, for example from 0.2 to 20 μm, from 0.3 to 15 μm, from 0.4 to 10 μm, or from 0.5 to 7.5 μm.

In some embodiments, for any rotational position of a 3 mm thick glass tube sample in the chromatic confocal thickness measurement both the outer surface line profile and the inner surface line profile have a maximum 2D slope angle of less than 20,000 arcsec, for example at most 15,000 arcsec, at most 10,000 arcsec, at most 7,500 arcsec, or at most 5,000 arcsec, and/or a maximum TWE of less than 25 μm, for example at most 20 μm, from at most 15 μm, at most 10 μm, or at most 7.5 μm.

In some embodiments, for any rotational position of a 3 mm thick glass tube sample in the chromatic confocal thickness measurement both the outer surface line profile and the inner surface line profile have a maximum 2D slope angle of at least 10 arcsec, for example at least 20 arcsec, at least 50 arcsec, at least 100 arcsec, or at least 125 arcsec, and/or a maximum TWE of at least 0.1 μm, for example at least 0.2 μm, at least 0.3 μm, at least 0.4 μm, or at least 0.5 μm.

In some embodiments, for any rotational position of a 3 mm thick glass tube sample in the chromatic confocal thickness measurement both the outer surface line profile and the inner surface line profile have a maximum 2D slope angle in a range of from 10 to <20,000 arcsec, for example from 20 to 15,000 arcsec, from 50 to 10,000 arcsec, from 100 to 7,500 arcsec, or from 125 to 5,000 arcsec.

In some embodiments, for any rotational position of a 3 mm thick glass tube sample in the chromatic confocal thickness measurement both the outer surface line profile and the inner surface line profile have a maximum 2D slope angle of less than 20,000 arcsec, for example at most 15,000 arcsec, at most 10,000 arcsec, at most 7,500 arcsec, or at most 5,000 arcsec.

In some embodiments, for any rotational position of a 3 mm thick glass tube sample in the chromatic confocal thickness measurement both the outer surface line profile and the inner surface line profile have a maximum 2D slope angle of at least 10 arcsec, for example at least 20 arcsec, at least 50 arcsec, at least 100 arcsec, or at least 125 arcsec.

In some embodiments, for any rotational position of a 3 mm thick glass tube sample in the chromatic confocal thickness measurement both the outer surface line profile and the inner surface line profile have a maximum TWE in a range of from 0.1 to <25 μm, for example from 0.2 to 20 μm, from 0.3 to 15 μm, from 0.4 to 10 μm, or from 0.5 to 7.5 μm.

In some embodiments, for any rotational position of a 3 mm thick glass tube sample in the chromatic confocal thickness measurement both the outer surface line profile and the inner surface line profile have a maximum TWE of less than 25 μm, for example at most 20 μm, from at most 15 μm, at most 10 μm, or at most 7.5 μm.

In some embodiments, for any rotational position of a 3 mm thick glass tube sample in the chromatic confocal thickness measurement both the outer surface line profile and the inner surface line profile have a maximum TWE of at least 0.1 μm, for example at least 0.2 μm, at least 0.3 μm, at least 0.4 μm, or at least 0.5 μm.

In some embodiments, for any rotational position of a 3 mm thick glass tube sample in the chromatic confocal thickness measurement both the outer surface line profile and the inner surface line profile have a maximum 2D slope angle in a range of from 10 to <20,000 arcsec, for example from 20 to 15,000 arcsec, from 50 to 10,000 arcsec, from 100 to 7,500 arcsec, or from 125 to 5,000 arcsec, and a maximum TWE in a range of from 0.1 to <25 μm, for example from 0.2 to 20 μm, from 0.3 to 15 μm, from 0.4 to 10 μm, or from 0.5 to 7.5 μm.

In some embodiments, for any rotational position of a 3 mm thick glass tube sample in the chromatic confocal thickness measurement both the outer surface line profile and the inner surface line profile have a maximum 2D slope angle of less than 20,000 arcsec, for example at most 15,000 arcsec, at most 10,000 arcsec, at most 7,500 arcsec, or at most 5,000 arcsec, and a maximum TWE of less than 25 μm, for example at most 20 μm, from at most 15 μm, at most 10 μm, or at most 7.5 μm.

In some embodiments, for any rotational position of a 3 mm thick glass tube sample in the chromatic confocal thickness measurement both the outer surface line profile and the inner surface line profile have a maximum 2D slope angle of at least 10 arcsec, for example at least 20 arcsec, at least 50 arcsec, at least 100 arcsec, or at least 125 arcsec, and a maximum TWE of at least 0.1 μm, for example at least 0.2 μm, at least 0.3 μm, at least 0.4 μm, or at least 0.5 μm.

In some embodiments, the glass tube has an inner diameter in a range of from 3.0 to 300 mm, for example from 6.0 to 150 mm, from 12.5 to 75.0 mm, from 25.0 to 37.5 mm, or from 27.5 to 35.0 mm. In some embodiments, the inner diameter of the glass tube is at least 3.0 mm, for example at least 6.0 mm, at least 12.5 mm, at least 25.0 mm, or at least 27.5 mm. In some embodiments, the inner diameter of the glass tube is at most 300 mm, for example at most 150 mm, at most 75.0 mm, at most 37.5 mm, or at most 35.0 mm.

In some embodiments, the glass tube has an outer diameter in a range of from 3.5 to 350 mm, for example from 7.5 to 175 mm, from 15.0 to 85.0 mm, from 30.0 to 45.0 mm, or from 35.0 to 40.0 mm. In some embodiments, the outer diameter of the glass tube is at least 3.5 mm, for example at least 7.5 mm, at least 15.0 mm, at least 30.0 mm, or at least 35.0 mm. In some embodiments, the outer diameter of the glass tube is at most 350 mm, for example at most 175 mm, at most 85.0 mm, at most 45.0 mm, or at most 40.0 mm.

In some embodiments, the ratio of outer diameter and inner diameter of the glass tube is in a range of from 1.02 to 2.00, for example from 1.05 to 1.75, from 1.10 to 1.40, or from 1.15 to 1.25. In some embodiments, the ratio of outer diameter and inner diameter of the glass tube is at least 1.02, for example at least 1.05, at least 1.10, or at least 1.15. In some embodiments, the ratio of outer diameter and inner diameter of the glass tube is at most 2.00, for example at most 1.75, at most 1.40, or at most 1.25.

In some embodiments, the glass tube has a wall thickness in a range of from 0.3 to 30 mm, for example from 0.5 to 15 mm, from 1.0 to 10 mm, from 1.5 to 7.5 mm, from 2.0 to 5.0 mm, or from 2.5 to 3.5 mm. In some embodiments, the wall thickness of the glass tube is at least 0.3 mm, for example at least 0.5 mm, at least 1.0 mm, at least 1.5 mm, at least 2.0 mm, or at least 2.5 mm. In some embodiments, the wall thickness of the glass tube is at most 30 mm, for example at most 15 mm, at most 10 mm, at most 7.5 mm, at most 5.0 mm, or at most 3.5 mm.

In some embodiments, the ratio of the inner diameter of the glass tube to the wall thickness of the glass tube is in a range of from 1.0 to 100, for example from 2.0 to 50, from 5.0 to 25, from 7.5 to 15, or from 8.5 to 12. In some embodiments, the ratio of the inner diameter of the glass tube to the wall thickness of the glass tube is at least 1.0, for example at least 2.0 at least 5.0, at least 7.5, or at least 8.5. In some embodiments, the ratio of the inner diameter of the glass tube to the wall thickness of the glass tube is at most 100, for example at most 50, at most 25, at most 15, or at most 12.

In some embodiments, the ratio of the outer diameter of the glass tube to the wall thickness of the glass tube is in a range of from 1.2 to 125, for example from 2.5 to 65, from 5.0 to 30, from 7.5 to 20, or from 10 to 15. In some embodiments, the ratio of the outer diameter of the glass tube to the wall thickness of the glass tube is at least 1.2, for example at least 2.5, at least 5.0, at least 7.5, or at least 10. In some embodiments, the ratio of the outer diameter of the glass tube to the wall thickness of the glass tube is at most 125, for example at most 65, at most 30, at most 25, or at most 15.

Brief Description of the Figures

Figure 1 shows a drawing head according to this disclosure.

Figure 2a shows the formation and position of streaks in conventionally manufactured glass tubes.

Figure 2b shows the formation and position of streaks in glass tubes manufactured according to this disclosure.

Figure 3a and Figure 3b show the simulated residence time of the glass melt (in minutes) in a drawing head according to this disclosure for, respectively, a mirror plane in the x-z direction, and the x-y plane of the glass outlet (4).

Figure 4a and Figure 4b show the simulated concentration of a marker species originating from the free surface of the glass melt in a drawing head according to this disclosure for, respectively, a mirror plane in the x-z direction, and the x-y plane of the glass outlet (4).

Figure 5a and Figure 5b show the simulated concentration of a marker species originating from the drawing needle in a drawing head according to this disclosure for, respectively, a mirror plane in the x-z direction, and the x-y plane of the glass outlet (4).

Figures 6a, 6b and 6c show the simulated concentration of a marker species originating from the free surface of the glass melt in a drawing head according to this disclosure for, respectively, variations in the vertical distance c at a constant total height h (Figure 6a: $H_E$), variations in the filling height of the glass melt $h_{melt}$ between a glass melt level and a central axis of the glass inlet (Figure 6b: GS), and variations of the vertical distance v of the head overflow (Figure 6c: $H_Ü$).

Figures 7a, 7b and 7c show the simulated concentration of a marker species originating from the drawing needle in a drawing head according to this disclosure for, respectively, variations in the vertical distance c at a constant total height h (Figure 7a: $H_E$), variations in the filling height of the glass melt $h_{melt}$ between a glass melt level and a central axis of the glass inlet (Figure 7b: GS), and variations of the vertical distance v of the head overflow (Figure 7c: $H_Ü$).

Figure 8 is a schematic drawing (not to scale) of the positioning of the line profiles (16, 17, 18) within the measured section of the glass tube (10).

Figure 9 shows the experimental data obtained at the 320° rotational position and indicates how the line profile (left side) is obtained based on the 3D representation (right side).

Figure 10 shows the experimental data obtained at the 320° rotational position (Figure 10A) and at the 240° rotational position (Figure 10B). The 3D representations are shown on the right side and the corresponding center line profiles on the left side.

Figure 11 shows a bar chart summarizing the maximum 2D slope angle obtained at different rotational positions in measurement series M1 to M6.

Figure 12 shows a bar chart summarizing the maximum TWE obtained at different rotational positions in measurement series M1 to M6.

Detailed Description of the Figures

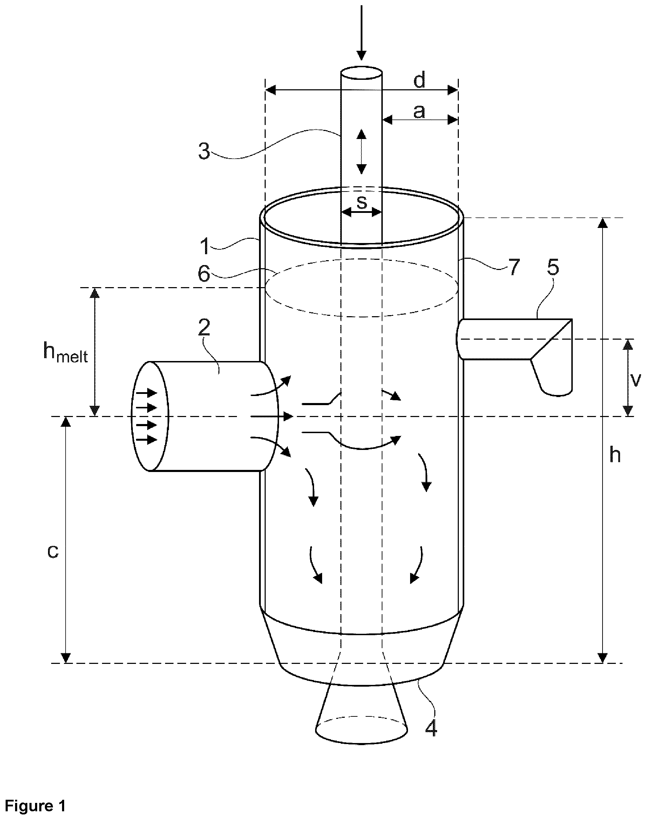

Figure 1 shows a drawing head (1) according to this disclosure, which allows production of glass tubes which are substantially or completely devoid of visually discernible nor palpable streaks, even in the absence of the operation of the head overflow (5). Depending on the type of glass processed and the production parameters, a head overflow (5) may be omitted completely. The glass melt enters the drawing head (1) via the glass inlet (2) and surrounds the shaft of the drawing needle (3). The glass melt leaves the drawing head (1) via the glass outlet (4) and is formed into a glass tube which results from the drawing needle (3). The position of the drawing needle (3) may be adjusted vertically and/or laterally to further control the production of the glass tubes. The glass melt level (6), i.e., the surface of the glass melt, within the drawing head (1) is indicated. The inner wall (7) of the drawing head (1) is indicated and may at least partially comprise a noble metal lining, e.g., platinum or a platinum alloy. Characteristic dimensions of the drawing head (1) are indicated: the total height h, the inner diameter d, the vertical distance v between the central axis of the head overflow (5) and the central axis of the glass inlet (2), the vertical distance c between the glass outlet (4) and the central axis of the glass inlet (2), the filling height of the glass melt $h_{melt}$ between the glass melt level (6) and the central axis of the glass inlet (2), the distance a between the drawing needle (3) and the inner wall (7) of the drawing head (1). Due to the specially adapted geometry of the drawing head (1), the flow conditions during the drawing of the glass tubes are controlled in such a way that any looping streak in the glass melt exclusively results in streaks inside the drawn glass tubes, which streaks do not appear on the outer surface (11) or the inner surface (12) of the glass tubes and which are thus neither visually discernible nor palpable.

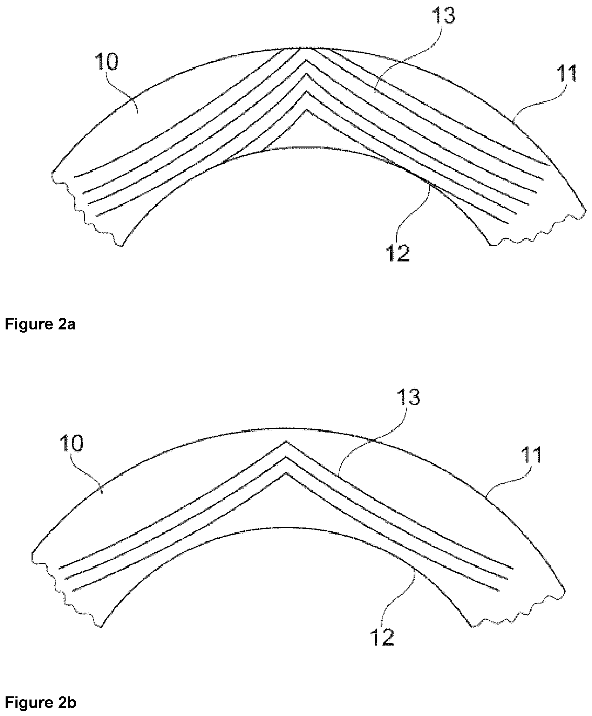

Figure 2a shows the formation and position of streaks (13) in the glass tube (10) which form in a conventional process. The glass tube is surrounded by an outer surface (11) and an inner surface (12). The streaks extend from the inside of the glass tube to the outer surface (11), where they become visible to the naked eye as streaks on the glass tube surface. In some cases, the streaks (13) on the outer surface may also lead to palpable unevenness. Both the visible streaks and the palpable streaks impair the quality of the manufactured products and lead to increased scrap.

Figure 2b shows the formation of the streak pattern in a cross-section of a glass tube (10) manufactured according to the teaching of this disclosure. The streaks are only found inside the tube and do not appear on the outer surface (11) or the inner surface (12) of the glass tubes.

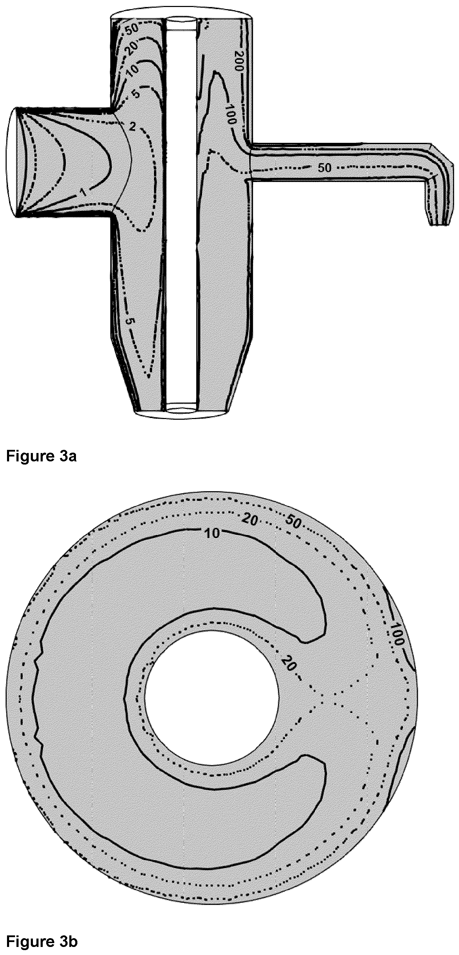

Figure 3a and Figure 3b show the simulated residence time of the glass melt (in minutes) in a drawing head according to this disclosure for, respectively, a mirror plane in the x-z direction, and the x-y plane of the glass outlet (4). Simulations were performed according to the 'Methods' section of this disclosure. Figure 3a and Figure 3b hence show the space- and time-resolved distribution of the glass melt passing through the drawing head during a process of manufacturing glass tubes run under typical process conditions.

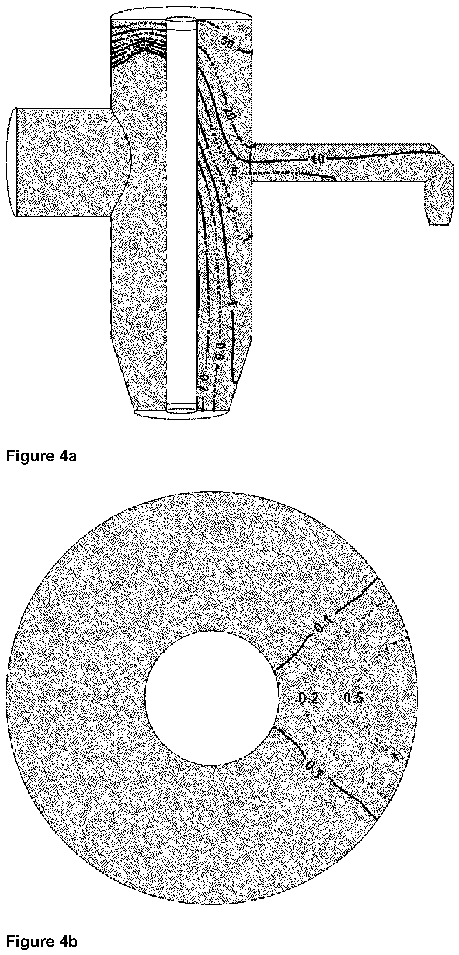

Figure 4a and Figure 4b show the simulated concentration of a marker species originating from the free surface of the glass melt in a drawing head according to this disclosure for, respectively, a mirror plane in the x-z direction, and the x-y plane of the glass outlet (4). Simulations were performed according to the 'Methods' section of this disclosure. The simulated concentration of the marker species is indicated in arbitrary units and reflects the space- and time-resolved distribution of said marker species in the glass melt when passing through the drawing head during a process of manufacturing glass tubes run under typical process conditions.

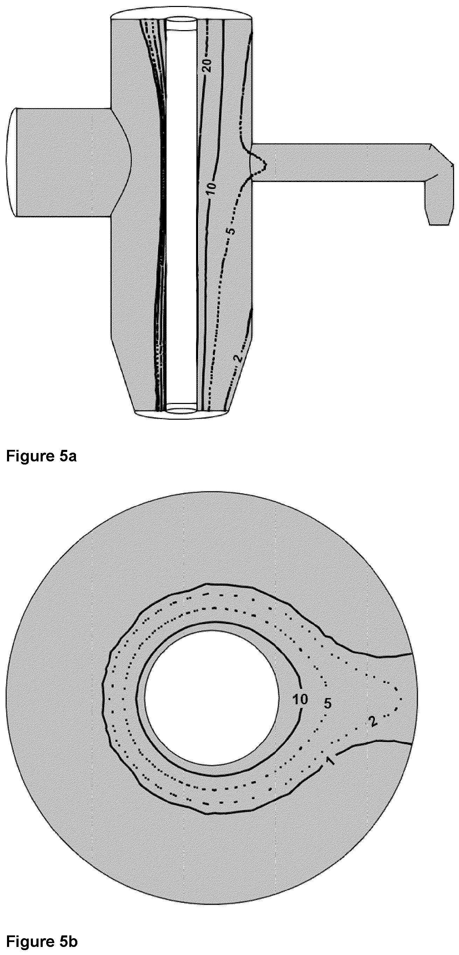

Figure 5a and Figure 5b show the simulated concentration of a marker species originating from the drawing needle in a drawing head according to this disclosure for, respectively, a mirror plane in the x-z direction, and the x-y plane of the glass outlet (4). Simulations were performed according to the 'Methods' section of this disclosure. The simulated concentration of the marker species is indicated in arbitrary units and reflects the space- and time-resolved distribution of said marker species in the glass melt when passing through the drawing head during a process of manufacturing glass tubes run under typical process conditions.

Figures 6a, 6b and 6c show the simulated concentration of a marker species originating from the free surface of the glass melt in a drawing head according to this disclosure for, respectively, variations in the vertical distance *c* at a constant total height *h* (Figure 6a: $H_E$), variations in the filling height of the glass melt $h_{melt}$ between a glass melt level and a central axis of the glass inlet (Figure 6b: GS), and variations of the vertical distance v of the head overflow (Figure 6c: $H_{\ddot{U}}$). Simulations were performed according to the 'Methods' section of this disclosure and display the angle-resolved concentration of the marker species at the outer surface of the emanating glass tube in the x-y plane of the glass outlet (4). The simulations indicate a strong inverse correlation for a mathematically positive vertical distance v of the head overflow ($H_{Ü}$) and the quantitative presence of the said marker species at the detected position. The simulations indicate a moderate inverse correlation for a mathematically positive vertical distance c at a constant total height h ($H_E$) and the quantitative presence of the said marker species at the detected position. The simulations indicate that a lower glass melt level (GS) slightly increases the quantitative presence of the said marker species at the detected position.

Figures 7a, 7b and 7c show the simulated concentration of a marker species originating from the drawing needle in a drawing head according to this disclosure for, respectively, variations in the vertical distance c at a constant total height h (Figure 7a: $H_E$), variations in the filling height of the glass melt $h_{melt}$ between a glass melt level and a central axis of the glass inlet (Figure 7b: GS), and variations of the vertical distance v of the head overflow (Figure 7c: $H_{Ü}$). Simulations were performed according to the 'Methods' section of this disclosure and display the angle-resolved concentration of the marker species at the outer surface of the emanating glass tube in the x-y plane of the glass outlet (4). The simulations indicate a strong inverse correlation for a mathematically positive vertical distance v of the head overflow ($H_{Ü}$) and the quantitative presence of the said marker species at the detected position. The simulations indicate an inverse correlation for a mathematically positive vertical distance c at a constant total height $h$ ($H_E$) and the quantitative presence of the said marker species at the detected position. The simulations indicate that a lower glass melt level (GS) increases the quantitative presence of the said marker species at the detected position.

Figure 8 is a schematic drawing (not to scale) of the positioning of the line profiles (16, 17, 18) within the measured section of the glass tube (10). The center line profile (16) is positioned into the measured section of glass tube (10) below vertex (14) of the tube section, perpendicular to the radius (15). The radius (15) is the direct and straight connection of vertex (14) and the center of the tube segment. The center line profile (16) is positioned symmetrically regarding both its x-positions and its y-position. Regarding its x-positions, the center line profile (16) is positioned such that half of the center line profile (16) is "left" of the radius (15) and half is "right" of the radius (15). Regarding its y-position, the center line profile is positioned such that the distance of the center of the center line profile (16) from the outer surface (11) of the glass tube (10) is equal to its distance from the inner surface (12) of the glass tube (10) measured along the radius (15). The outer surface line profile (17) and the inner surface line profile (18) are determined based on the y-position of the center line profile (16). The outer surface line profile (17) is the line profile which is parallel to the center line profile (16) and shifted towards the outer surface (11) of the glass tube (10) by a distance. Likewise, the inner surface line profile (18) is the line profile which is parallel to the center line profile (16) and shifted towards the inner surface (12) of the glass tube (10) by the same distance (19).

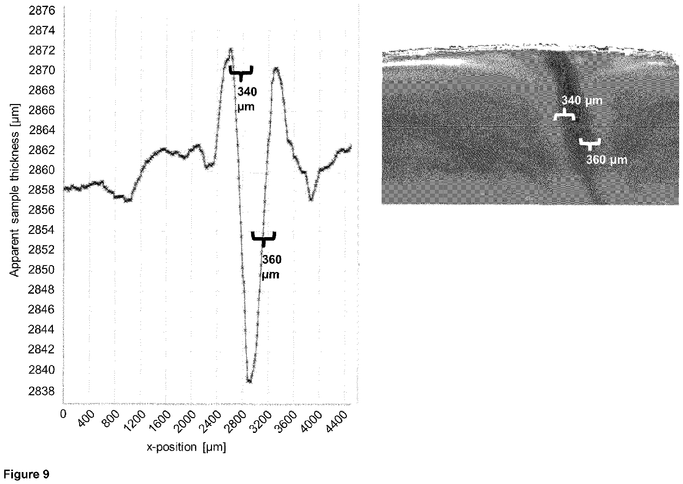

Figure 9 shows the experimental data obtained at the 320° rotational position and indicates how the line profile (left side) is obtained based on the 3D representation (right side). A center line profile was placed in the center of the measuring range. Two measuring cursors (340 $\mu$m and 360 $\mu$m) were positioned within this profile. The cursors were positioned at the streak position.

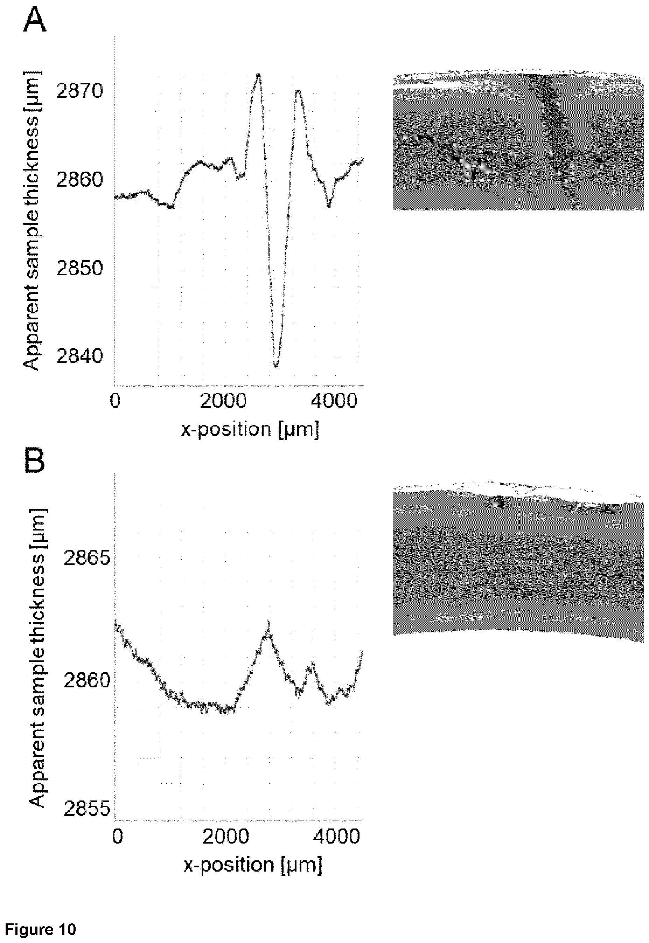

Figure 10 shows the experimental data obtained at the 320° rotational position (Figure 10A) and at the 240° rotational position (Figure 10B). The 3D representations are shown on the right side and the corresponding center line profiles on the left side. Figure 10A shows a streak extending from the outer surface to the inner surface of the glass tube. The line profile shows a large TWE associated with a steep 2D slop angle. In contrast, as shown in Figure 10B, there is no streak at the 240° rotational position. Notably, the line profiles in Figures 10A and 10B are not shown in the same scale regarding apparent sample thickness While the line profile of Figure 10A covers an apparent sample thickness from less than 2840 $\mu$m to more than 2870 $\mu$m, the line profile of Figure 10B is centered at an apparent sample thickness around 2860 $\mu$m.

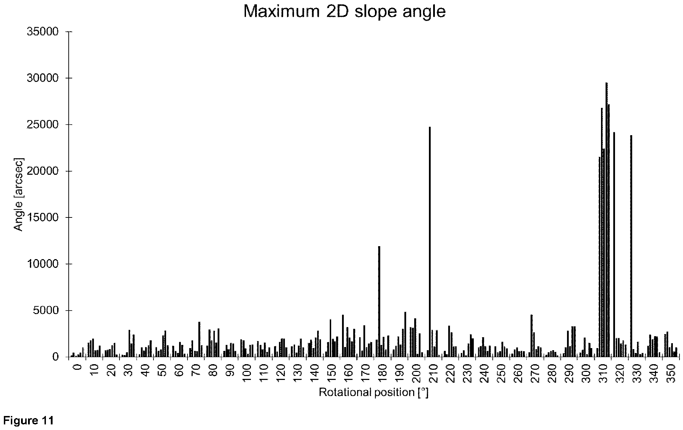

Figure 11 shows a bar chart summarizing the maximum 2D slope angle obtained at different rotational positions in measurement series M1 to M6. At each rotational position, one bar is shown for each measurement series. The determination of the maximum value of the 2D slope angle was reproducible in six measurement series (M1-M6). Except for outliers in series 2 (M2) for determining the magnitude of the 2D slope angle, all series of measurements showed only larger values at the position of the streak, between 310° and 330°.

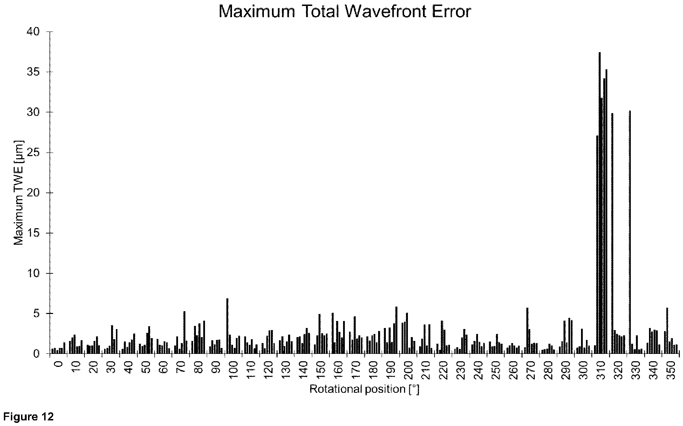

Figure 12 shows a bar chart summarizing the maximum TWE obtained at different rotational positions in measurement series M1 to M6. At each rotational position, one bar is shown for each measurement series. The determination of the maximum value of the TWE was reproducible in six measurement series (M1-M6). All series of measurements showed only larger values at the position of the streak, between 310° and 330°.

Methods

**Simulations**

The formation of the looping streak was assessed by a simulation of the glass melt flow in the drawing head for varying geometries using the CFD-software package FLUENT. The underlying mathematical model assumes an isothermal Stokes flow of the glass melt. The mass flow of the glass melt at the inlet into the drawing head and the portion x of the mass flow which is drained via the head overflow are prescribed. The free surface of the glass melt in the drawing head is idealized as a fixed wall with zero shear stresses. Its position is prescribed according to the theoretical glass level of the furnace. No slip condition applies to the inner walls of the drawing head.

The assumptions of this mathematical model are justified by typical parameter ranges of the Vello process. The model predicts similar velocity fields for geometrically similar drawing heads. The actual velocity magnitude scales with $\frac{\dot{m}}{\rho L^2}$, where $\dot{m}$ is the total glass flow rate, $\rho$ is the glass density and L is a characteristic length scale of the head geometry, e.g. the inlet diameter. A single model result is thus representative for the whole range of similar drawing head dimensions, mass flow rates and material properties of the glass.

The transport of two marker species was simulated in the model system: The first species qualitatively models a contamination of the glass resulting from the contact with the drawing needle by imposing a constant species source $j_n$ on the needle surface. The temperature of the drawing needle is lower than the temperature of the glass melt. The second species qualitatively models a contamination of the glass at the free surface, for example by evaporation effects, by imposing a constant species source $j_s$ on the free surface. The diffusion coefficients $D_n$ and $D_s$ of the marker species were chosen sufficiently small to assess convection-dominated species transport. Consequently, the species concentrations scale with $\frac{j_n \cdot L}{D_n}$ and $\frac{j_s \cdot L}{D_s}$ for similar drawing head sizes. The identities $\rho \cdot \frac{Dc_N}{Dt} = D_N \cdot \Delta c_N$ and $\rho \cdot \frac{Dc_S}{Dt} = D_S \cdot \Delta c_S$ were applied, using the boundary conditions $c_N = c_S = 0$ for the inlet, $D_N \cdot \frac{dc_N}{dn} = -j_N \; \left[\frac{kg}{m^2 s}\right]$ for the needle, and $D_S \cdot \frac{dc_S}{dn} = -j_S \left[\frac{kg}{m^2 s}\right]$ for the surface.

The model system thus allows comparing different drawing head geometries with respect to their propensity of looping streak formation. For this relative comparison, the actual values of the sources $j_n$ and $j_s$ are not relevant. The scaled species sources (shown in Figures 6a to 6c for the marker species at the free surface, and Figures 7a to 7c for the marker species at the drawing needle) were set as as $\frac{j_n \cdot L}{D_n} = \frac{j_s \cdot L}{D_s} = 115$. The drain flow portion, i.e., the portion which leaves the drawing head via the head overflow, was set as x = 0.042.

The following conditions were established in the simulations: $\dot{m}$ = 580 kg h$^{-1}$, $\rho$ = 2290 kg m$^3$, $\eta$ = 5000 Pa·s, $L$ = 0.115 m for the inlet diameter, and Re = 2.8 10$^{-4}$ << 1. The Stokes approximation was thus sufficient, i.e., 0 = -$\nabla$*$\tilde{p}$* + $\Delta\vec{u}$*. The provided similarity solution holds for scaled geometries, in which the mass flow and/or the viscosity can be changed, provided that *Re* << 1 and provided that x = *const.*

Examples

A segment of a glass tube having a thickness of 3 mm was tested for streaks using chromatic confocal thickness measurements.

**Sample preparation**

The glass tube had an inner diameter of 31 mm and an outer diameter of 37 mm. Thus, the wall thickness was 3 mm.

The tube segment to be measured by chromatic confocal thickness measurement was cut from the glass tube with a diamond saw. The tube segment was bonded to a glass carrier at 100°C using C-putty. Subsequently, the tube segment was coarsely ground (SiC-free grain 250). The tube segment was then further ground on a pellet disk (45 $\mu$m). Subsequently, the sample was re-bonded to the second side and the grinding steps were repeated. Therein the sample was ground to a final thickness of 3 mm and polished. The sample was de-bonded and cleaned with ethanol in an ultrasonic bath.

**Chromatic confocal thickness measurement**

Equipment used:

- Coordinate measuring machine CT300 (cyberTECHNOLOGIES)

- Chromatic confocal distance sensor S3000 (3 mm measuring range, 12 μm spot diameter; 0.100 μm resolution)

- Test device PE 1-019

- SCAN SUITE, ScanCT software, version 8.10.7283

Measurement and evaluation parameters used:

- Meander scan with (10x10) μm step size and (4500x2900) μm distance

- Assumed optical parameters (BF33): n=1.4714 and Abbe=65.69

- Cut-off filter (top: 2900 μm, bottom: 2820 μm) for outlier elimination

- Median 3:3 for data smoothing

The sample was clamped in a polymer ring in the "Spindler & Hoyer" sample holder (three-jaw holder). The polymer ring is designed to prevent distortion of the tube section. The notch marked as the start position was aligned at "12 o'clock" or 0°. The front face was facing the sensor. The specimen was measured by scanning it in a meandering pattern. The specimen was then step by step rotated 10° counterclockwise and repeatedly measured again until all positions from "0° position" to "350° position" were measured.

**Data analysis**

A center line profile was placed in the center of the measuring range, as shown in Figure 8. Two measuring cursors (340 μm and 360 μm) were positioned within this profile. The cursors were positioned at the streak position (see Figure 9). Since the absolute thickness of 3 mm, which was predetermined by the polish, could not be normalized by software means, the z-axes (grey scale, not shown) of the 3D TWE representations have values in the range of approximately 2800 μm. The same holds true for the y-axis in the line profiles because the z-values of the 3D representations are displayed as y-values in the 2D line profiles.

The 2D slope angles measured within the line profiles were documented. The maximum 2D slope angle of the two measuring cursors was used for the evaluation. The angle is given in the unit arcsec.

As a further measurement parameter, the total wavefront error was evaluated in the same way. The evaluated TWE was the peak-to-valley value.

Due to the manual positioning of the measuring cursors, the determined absolute values of the 2D slope angles are not necessarily exactly the absolute maximum 2D slope angles of the entire evaluation range. The same applies to the TWE. However, as exemplarily shown in Figure 9, the manual positioning was good enough to expect only neglectable errors in this respect.

The determination of the maximum value of the 2D slope angle (see Figure 11) and the TWE (see Figure 12) was reproducible in six measurement series (M1-M6). Except for outliers in series 2 (M2) for determining the magnitude of the 2D slope angle (Figure 11), all series of measurements showed only larger values at the position of the streak, between 310° and 330°.

Exemplary representations of the measurement series 1 (M1) for the rotational positions 240° and 320° are shown in Figure 10.

The results of all rotational positions are shown in the following Tables 1 to 3 and summarized in Figures 11 and 12.

**Table 1**

| Messreihe | M1 | | | | | | M2 | | | | | |
|---|---|---|---|---|---|---|---|---|---|---|---|---|
| Rotation [°] | 2D slope angle [arcsec] | | | TWE [μm] | | | 2D slope angle [arcsec] | | | TWE [μm] | | |
| | P1 | P2 | max | P1 | P2 | max | P1 | P2 | max | P1 | P2 | max |
| 0 | 21 | 158 | **158** | 0.6 | 0.6 | **0.6** | 466 | 475 | **475** | 0.7 | 0.7 | **0.7** |

(continued)

| Messreihe | M1 | | | | | | M2 | | | | | |
|---|---|---|---|---|---|---|---|---|---|---|---|---|
| | 2D slope angle [arcsec] | | | TWE [μm] | | | 2D slope angle [arcsec] | | | TWE [μm] | | |
| Rotation [°] | P1 | P2 | max | P1 | P2 | max | P1 | P2 | max | P1 | P2 | max |
| 10 | 1530 | 22 | **1530** | 1.6 | 0.7 | **1.6** | 777 | 1792 | **1792** | 0.7 | 2.0 | **2.0** |
| 20 | 517 | 709 | **709** | 0.6 | 1.1 | **1.1** | 472 | 758 | **758** | 0.6 | 1.0 | **1.0** |
| 30 | 220 | 139 | **220** | 0.6 | 0.3 | **0.6** | 67 | 189 | **189** | 0.7 | 0.7 | **0.7** |
| 40 | 284 | 261 | **284** | 0.3 | 0.6 | **0.6** | 492 | 1018 | **1018** | 0.4 | 1.6 | **1.6** |
| 50 | 1047 | 28 | **1047** | 1.2 | 0.4 | **1.2** | 107 | 620 | **620** | 0.8 | 1.0 | **1.0** |
| 60 | 323 | 1193 | **1193** | 0.8 | 1.8 | **1.8** | 281 | 629 | **629** | 0.5 | 1.1 | **1.1** |
| 70 | 945 | 310 | **945** | 1.0 | 0.5 | **1.0** | 338 | 1779 | **1779** | 0.4 | 2.1 | **2.1** |
| 80 | 1235 | 184 | **1235** | 1.6 | 0.4 | **1.6** | 2946 | 987 | **2946** | 3.5 | 1.5 | **3.5** |
| 90 | 613 | 176 | **613** | 0.9 | 0.4 | **0.9** | 711 | 1278 | **1278** | 0.9 | 1.7 | **1.7** |
| 100 | 1846 | 604 | **1846** | 6.9 | 0.9 | **6.9** | 1764 | 1794 | **1794** | 2.4 | 2.3 | **2.4** |
| 110 | 337 | 1705 | **1705** | 0.6 | 2.1 | **2.1** | 0 | 1298 | **1298** | 0.7 | 1.4 | **1.4** |
| 120 | 1164 | 397 | **1164** | 1.3 | 0.8 | **1.3** | 199 | 566 | **566** | 0.2 | 0.7 | **0.7** |
| 130 | 147 | 1116 | **1116** | 0.4 | 1.7 | **1.7** | 1334 | 306 | **1334** | 2.2 | 0.9 | **2.2** |
| 140 | 1481 | 284 | **1481** | 2.1 | 0.5 | **2.1** | 1830 | 1444 | **1830** | 2.1 | 1.8 | **2.1** |
| 150 | 368 | 547 | **547** | 1.2 | 0.8 | **1.2** | 1604 | 189 | **1604** | 2.3 | 0.8 | **2.3** |
| 160 | 4570 | 533 | **4570** | 5.1 | 2.2 | **5.1** | 1048 | 9 | **1048** | 1.4 | 1.1 | **1.4** |
| 170 | 2113 | 321 | **2113** | 2.5 | 2.8 | **2.8** | 649 | 163 | **649** | 1.3 | 1.8 | **1.8** |
| 180 | 1844 | 1008 | **1844** | 2.2 | 1.3 | **2.2** | 11912 | 210 | **11912** | 1.7 | 0.9 | **1.7** |
| 190 | 788 | 711 | **788** | 3.2 | 1.6 | **3.2** | 1181 | 160 | **1181** | 1.4 | 0.6 | **1.4** |
| 200 | 3201 | 910 | **3201** | 3.9 | 2.1 | **3.9** | 2539 | 3125 | **3125** | 3.2 | 4.0 | **4.0** |
| 210 | 734 | 482 | **734** | 0.9 | 0.6 | **0.9** | 24751 | 802 | **24751** | 1.9 | 0.6 | **1.9** |
| 220 | 270 | 634 | **634** | 0.5 | 1.2 | **1.2** | 309 | 156 | **309** | 0.5 | 0.3 | **0.5** |
| 230 | 417 | 171 | **417** | 0.6 | 0.4 | **0.6** | 450 | 684 | **684** | 0.5 | 0.8 | **0.8** |
| 240 | 1022 | 213 | **1022** | 1.2 | 0.8 | **1.2** | 1155 | 316 | **1155** | 1.6 | 0.9 | **1.6** |
| 250 | 991 | 1136 | **1136** | 1.5 | 1.3 | **1.5** | 242 | 482 | **482** | 0.7 | 0.9 | **0.9** |
| 260 | 46 | 356 | **356** | 0.6 | 0.8 | **0.8** | 800 | 800 | **800** | 1.1 | 1.1 | **1.1** |
| 270 | 90 | 507 | **507** | 0.6 | 0.8 | **0.8** | 541 | 4555 | **4555** | 1.3 | 5.8 | **5.8** |
| 280 | 158 | 240 | **240** | 0.4 | 0.5 | **0.5** | 11 | 485 | **485** | 0.3 | 0.6 | **0.6** |
| 290 | 287 | 409 | **409** | 0.9 | 0.5 | **0.9** | 1043 | 825 | **1043** | 1.4 | 1.6 | **1.6** |
| 300 | 468 | 169 | **468** | 0.8 | 0.3 | **0.8** | 770 | 105 | **770** | 0.8 | 0.9 | **0.9** |
| 310 | 913 | 263 | **913** | 1.1 | 0.8 | **1.1** | 21517 | 18750 | **21517** | 27.1 | 25.4 | **27.1** |
| 320 | 24205 | 20180 | **24205** | 29.9 | 26.3 | **29.9** | 2025 | 733 | **2025** | 2.9 | 0.6 | **2.9** |
| 330 | 23846 | 20929 | **23846** | 30.2 | 28.5 | **30.2** | 863 | 89 | **863** | 1.3 | 0.4 | **1.3** |
| 340 | 1186 | 237 | **1186** | 1.4 | 0.5 | **1.4** | 2404 | 85 | **2404** | 3.2 | 0.4 | **3.2** |
| 350 | 2475 | 964 | **2475** | 2.8 | 1.4 | **2.8** | 2425 | 2737 | **2737** | 5.7 | 4.5 | **5.7** |

Table 2

| Messreihe | M3 | | | | | | M4 | | | | | |
|---|---|---|---|---|---|---|---|---|---|---|---|---|
| | 2D slope angle [arcsec] | | | TWE [μm] | | | 2D slope angle [arcsec] | | | TWE [μm] | | |
| Rotation [°] | P1 | P2 | max | P1 | P2 | max | P1 | P2 | max | P1 | P2 | max |
| 0 | 20 | 126 | **126** | 0.5 | 0.4 | **0.5** | 132 | 252 | **252** | 0.7 | 0.6 | **0.7** |
| 10 | 251 | 1947 | **1947** | 0.4 | 2.4 | **2.4** | 318 | 683 | **683** | 0.5 | 0.9 | **0.9** |
| 20 | 811 | 555 | **811** | 1.0 | 0.7 | **1.0** | 1269 | 157 | **1269** | 1.6 | 0.3 | **1.6** |
| 30 | 79 | 480 | **480** | 0.3 | 1.0 | **1.0** | 2933 | 508 | **2933** | 3.6 | 0.9 | **3.6** |
| 40 | 329 | 646 | **646** | 0.8 | 0.9 | **0.9** | 1051 | 758 | **1051** | 1.4 | 1.0 | **1.4** |
| 50 | 806 | 804 | **806** | 1.0 | 1.2 | **1.2** | 981 | 2281 | **2281** | 1.8 | 2.6 | **2.6** |
| 60 | 240 | 435 | **435** | 0.7 | 1.0 | **1.0** | 101 | 1590 | **1590** | 1.1 | 1.6 | **1.6** |
| 70 | 521 | 634 | **634** | 0.6 | 0.6 | **0.6** | 578 | 381 | **578** | 1.3 | 1.2 | **1.3** |
| 80 | 1779 | 558 | **1779** | 2.3 | 0.7 | **2.3** | 783 | 2802 | **2802** | 1.3 | 3.8 | **3.8** |
| 90 | 521 | 792 | **792** | 0.8 | 1.2 | **1.2** | 1478 | 538 | **1478** | 1.7 | 0.8 | **1.7** |
| 100 | 892 | 172 | **892** | 1.2 | 0.5 | **1.2** | 75 | 341 | **341** | 0.7 | 0.6 | **0.7** |
| 110 | 209 | 805 | **805** | 0.5 | 1.1 | **1.1** | 1513 | 823 | **1513** | 1.8 | 1.1 | **1.8** |
| 120 | 1582 | 1449 | **1582** | 2.2 | 1.7 | **2.2** | 1989 | 541 | **1989** | 2.9 | 0.5 | **2.9** |
| 130 | 47 | 475 | **475** | 0.7 | 1.0 | **1.0** | 1222 | 44 | **1222** | 1.5 | 0.7 | **1.5** |
| 140 | 310 | 949 | **949** | 0.9 | 1.3 | **1.3** | 157 | 2084 | **2084** | 0.3 | 2.4 | **2.4** |
| 150 | 4031 | 2860 | **4031** | 5.0 | 4.3 | **5.0** | 1939 | 782 | **1939** | 2.6 | 1.2 | **2.6** |
| 160 | 2699 | 3184 | **3184** | 4.1 | 3.6 | **4.1** | 1184 | 2091 | **2091** | 1.6 | 2.7 | **2.7** |
| 170 | 3402 | 1506 | **3402** | 4.7 | 2.8 | **4.7** | 1046 | 314 | **1046** | 1.9 | 1.5 | **1.9** |
| 180 | 1223 | 1302 | **1302** | 1.4 | 2.3 | **2.3** | 2155 | 356 | **2155** | 2.5 | 1.3 | **2.5** |
| 190 | 2208 | 1459 | **2208** | 3.3 | 2.0 | **3.3** | 1334 | 32 | **1334** | 1.5 | 1.2 | **1.5** |
| 200 | 1714 | 4175 | **4175** | 1.8 | 5.1 | **5.1** | 340 | 288 | **340** | 0.8 | 0.6 | **0.8** |
| 210 | 750 | 2919 | **2919** | 1.3 | 3.6 | **3.6** | 901 | 1080 | **1080** | 0.8 | 1.1 | **1.1** |
| 220 | 159 | 3349 | **3349** | 0.7 | 4.1 | **4.1** | 2672 | 629 | **2672** | 3.0 | 1.4 | **3.0** |
| 230 | 54 | 174 | **174** | 0.6 | 0.4 | **0.6** | 1228 | 1422 | **1422** | 2.0 | 1.5 | **2.0** |
| 240 | 2130 | 907 | **2130** | 2.5 | 1.3 | **2.5** | 402 | 1145 | **1145** | 0.6 | 1.5 | **1.5** |
| 250 | 588 | 162 | **588** | 1.0 | 0.5 | **1.0** | 793 | 1623 | **1623** | 0.9 | 2.5 | **2.5** |
| 260 | 1009 | 656 | **1009** | 1.4 | 1.0 | **1.4** | 600 | 79 | **600** | 1.1 | 0.6 | **1.1** |
| 270 | 2657 | 290 | **2657** | 3.1 | 1.0 | **3.1** | 277 | 871 | **871** | 0.7 | 1.2 | **1.2** |
| 280 | 623 | 171 | **623** | 0.6 | 0.6 | **0.6** | 143 | 737 | **737** | 0.3 | 1.2 | **1.2** |
| 290 | 217 | 2811 | **2811** | 1.0 | 4.1 | **4.1** | 1154 | 394 | **1154** | 1.4 | 0.9 | **1.4** |
| 300 | 2097 | 1323 | **2097** | 3.1 | 1.5 | **3.1** | 36 | 292 | **292** | 0.8 | 0.6 | **0.8** |
| 310 | 26799 | 25892 | **26799** | 37.5 | 29.9 | **37.5** | 22394 | 18352 | **22394** | 30.9 | 31.8 | **31.8** |
| 320 | 2027 | 411 | **2027** | 2.5 | 0.8 | **2.5** | 214 | 1440 | **1440** | 0.8 | 2.3 | **2.3** |
| 330 | 429 | 212 | **429** | 0.4 | 0.6 | **0.6** | 1615 | 26 | **1615** | 2.3 | 0.4 | **2.3** |
| 340 | 550 | 1889 | **1889** | 0.6 | 2.8 | **2.8** | 301 | 2241 | **2241** | 0.8 | 3.0 | **3.0** |
| 350 | 1012 | 1073 | **1073** | 1.3 | 1.5 | **1.5** | 924 | 1473 | **1473** | 1.4 | 2.0 | **2.0** |

Table 3

| Messreihe | M5 | | | | | | M6 | | | | | |
|---|---|---|---|---|---|---|---|---|---|---|---|---|
| | 2D slope angle [arcsec] | | | TWE [μm] | | | 2D slope angle [arcsec] | | | TWE [μm] | | |
| Rotation [°] | P1 | P2 | max | P1 | P2 | max | P1 | P2 | max | P1 | P2 | max |
| 0 | 452 | 15 | **452** | 0.7 | 0.3 | **0.7** | 995 | 270 | **995** | 1.4 | 0.7 | **1.4** |
| 10 | 544 | 777 | **777** | 0.8 | 1.0 | **1.0** | 1224 | 365 | **1224** | 1.7 | 0.4 | **1.7** |
| 20 | 822 | 1481 | **1481** | 1.2 | 2.2 | **2.2** | 276 | 173 | **276** | 1.0 | 1.1 | **1.1** |
| 30 | 342 | 1412 | **1412** | 1.2 | 1.8 | **1.8** | 2387 | 1086 | **2387** | 3.1 | 1.3 | **3.1** |
| 40 | 1259 | 1023 | **1259** | 1.7 | 1.8 | **1.8** | 1774 | 395 | **1774** | 2.5 | 0.4 | **2.5** |
| 50 | 370 | 2834 | **2834** | 2.1 | 3.5 | **3.5** | 1109 | 1253 | **1253** | 1.1 | 2.0 | **2.0** |
| 60 | 776 | 1298 | **1298** | 1.4 | 1.4 | **1.4** | 360 | 264 | **360** | 0.7 | 0.5 | **0.7** |
| 70 | 3798 | 2936 | **3798** | 5.3 | 3.2 | **5.3** | 592 | 1259 | **1259** | 1.1 | 1.7 | **1.7** |
| 80 | 178 | 1522 | **1522** | 1.2 | 2.1 | **2.1** | 2206 | 3054 | **3054** | 2.8 | 4.1 | **4.1** |
| 90 | 1171 | 1431 | **1431** | 1.5 | 1.8 | **1.8** | 336 | 617 | **617** | 0.7 | 0.6 | **0.7** |
| 100 | 1093 | 1309 | **1309** | 2.0 | 1.6 | **2.0** | 1316 | 933 | **1316** | 2.2 | 1.9 | **2.2** |
| 110 | 111 | 522 | **522** | 0.6 | 0.7 | **0.7** | 979 | 559 | **979** | 1.2 | 0.7 | **1.2** |
| 120 | 892 | 1947 | **1947** | 1.4 | 3.0 | **3.0** | 1001 | 170 | **1001** | 1.3 | 0.7 | **1.3** |
| 130 | 1968 | 961 | **1968** | 2.4 | 1.4 | **2.4** | 1043 | 834 | **1043** | 1.6 | 1.4 | **1.6** |
| 140 | 2803 | 1186 | **2803** | 3.2 | 1.4 | **3.2** | 609 | 1848 | **1848** | 0.7 | 2.6 | **2.6** |
| 150 | 1669 | 118 | **1669** | 2.3 | 1.0 | **2.3** | 2192 | 92 | **2192** | 2.5 | 0.5 | **2.5** |
| 160 | 695 | 1664 | **1664** | 1.6 | 2.0 | **2.0** | 2280 | 3011 | **3011** | 4.1 | 3.3 | **4.1** |
| 170 | 1416 | 1168 | **1416** | 2.3 | 2.2 | **2.3** | 1591 | 1352 | **1591** | 2.0 | 2.0 | **2.0** |
| 180 | 625 | 787 | **787** | 0.8 | 1.4 | **1.4** | 57 | 2307 | **2307** | 1.1 | 2.8 | **2.8** |
| 190 | 3030 | 2151 | **3030** | 3.8 | 3.0 | **3.8** | 4857 | 1323 | **4857** | 5.9 | 1.8 | **5.9** |
| 200 | 2535 | 1779 | **2535** | 2.1 | 2.1 | **2.1** | 347 | 505 | **505** | 0.8 | 1.6 | **1.6** |
| 210 | 147 | 2844 | **2844** | 1.1 | 3.7 | **3.7** | 223 | 40 | **223** | 0.7 | 0.7 | **0.7** |
| 220 | 1081 | 365 | **1081** | 1.1 | 0.5 | **1.1** | 1126 | 275 | **1126** | 1.2 | 1.0 | **1.2** |
| 230 | 493 | 2436 | **2436** | 0.7 | 3.1 | **3.1** | 2003 | 1777 | **2003** | 2.4 | 2.4 | **2.4** |
| 240 | 639 | 588 | **639** | 0.9 | 0.8 | **0.9** | 1221 | 49 | **1221** | 1.4 | 0.5 | **1.4** |
| 250 | 33 | 1096 | **1096** | 0.5 | 1.4 | **1.4** | 784 | 905 | **905** | 1.0 | 1.3 | **1.3** |
| 260 | 314 | 640 | **640** | 0.8 | 0.8 | **0.8** | 108 | 587 | **587** | 0.5 | 1.0 | **1.0** |
| 270 | 592 | 1123 | **1123** | 1.0 | 1.4 | **1.4** | 291 | 1010 | **1010** | 0.7 | 1.3 | **1.3** |
| 280 | 517 | 354 | **517** | 1.0 | 0.4 | **1.0** | 170 | 174 | **174** | 0.5 | 0.4 | **0.5** |
| 290 | 413 | 3291 | **3291** | 1.2 | 4.5 | **4.5** | 3280 | 944 | **3280** | 4.2 | 1.4 | **4.2** |
| 300 | 739 | 1505 | **1505** | 1.3 | 1.7 | **1.7** | 203 | 913 | **913** | 0.7 | 1.0 | **1.0** |
| 310 | 29526 | 24738 | **29526** | 34.2 | 33.4 | **34.2** | 27157 | 22899 | **27157** | 35.3 | 34.4 | **35.3** |
| 320 | 1788 | 206 | **1788** | 2.2 | 0.3 | **2.2** | 1294 | 1316 | **1316** | 2.0 | 2.3 | **2.3** |
| 330 | 283 | 218 | **283** | 0.3 | 0.6 | **0.6** | 425 | 148 | **425** | 0.7 | 0.4 | **0.7** |
| 340 | 613 | 2179 | **2179** | 0.9 | 2.9 | **2.9** | 310 | 503 | **503** | 0.8 | 1.2 | **1.2** |
| 350 | 430 | 551 | **551** | 0.6 | 1.1 | **1.1** | 10 | 989 | **989** | 0.8 | 1.2 | **1.2** |

Reference numerals

1        drawing head

2        glass inlet

3        drawing needle

4        glass outlet

5        head overflow

6        glass melt level

7        inner wall

10      glass tube

11      outer surface of the glass tube

12      inner surface of the glass tube

13      streak in the glass tube

14      vertex

15      radius

16      center line profile

17      outer surface line profile

18      inner surface line profile

19      distance between line profiles

$h$        total height

$h_{melt}$    filling height of the glass melt, i.e. distance between glass melt level and central axis of glass inlet

$d$        inner diameter

$s$        shaft diameter

$c$        distance between glass outlet and central axis of the glass inlet

$a$        distance between shaft and inner wall

$v$        vertical distance between central axis of head overflow and a central axis of glass inlet

**Claims**

1.   Drawing head (1) for producing a glass tube, wherein the drawing head (1) comprises a glass inlet (2) for receiving a glass melt and a glass outlet (4) for discharging the glass melt, the drawing head (1) having a total height h and an inner diameter d,
**characterized by** one or more of the following features:

- the drawing head (1) further comprising a head overflow (5), wherein a central axis of the head overflow (5) is arranged vertically above a central axis of the glass inlet (2) by a vertical distance $v$, **characterized in that** a ratio $v/h$ is at least 0.05/1, or at least 0.1/1;

- the drawing head (1) having a vertical distance c between the glass outlet (4) and a central axis of the glass inlet (2), **characterized in that** a ratio c/h is from 0.2/1 to 0.8/1, more preferably the ratio c/h is from 0.4/1 to 0.6/1 or alternatively from 0.2/1 to 0.4/1;

- the drawing head (1) having a filling height of the glass melt $h_{melt}$ between a glass melt level (6) and a central axis of the glass inlet (2), when in operation, **characterized in that** a ratio $h_{melt}/h$ is at least 0.1/1, or at least 0.2/1.

2. Drawing head (1) according to claim 1, wherein a ratio h/d is from 2/1 to 7/1, more preferably the ratio h/d is from 3/1 to 4.5/1.

3. Drawing head (1) according to claim 1 or 2, having an inner diameter of the glass inlet (2) $d_{i,inlet}$ and having an inner diameter of the head overflow (5) $d_{i,overflow}$, wherein a ratio of $d_{i,in-let}/d_{i,overflow}$ is between 5/1 and 1.5/1, more preferably the ratio $d_{i,inlet}/d_{i,overflow}$ is between 3/1 and 2/1.

4. Drawing head (1) according to any one of claims 1 to 3, **characterized in that** the inner diameter d is between 120 and 400 mm, preferably the inner diameter d is between 150 and 300 mm.

5. Drawing head (1) according to any one of claims 1 to 4, the drawing head (1) further comprising an inner wall (7), **characterized in that** the inner wall (7) of the drawing head (1), which during use contacts a glass melt, at least partially comprises a noble metal lining.

6. Apparatus for producing a glass tube comprising a drawing head (1) according to any one of claims 1 to 5 and a drawing needle (3).

7. Apparatus according to claim 8, **characterized in that** a distance a between the drawing needle (3) and an inner wall (7) of the drawing head (1) is in the range from 40 to 300 mm, more preferably the distance a is in the range from 50 to 150 mm.

8. Process for producing a glass tube via a drawing process, comprising the step of passing a glass melt through an apparatus according to claim 6 or claim 7, wherein the process optionally comprises a subsequent hot forming step.

9. Process according to claim 10, wherein the drawing head (1) further comprises a head overflow (5), **characterized in that** an amount of glass melt drawn off via the head overflow (5) is less than 10%, preferably less than 5%, of the amount of glass melt fed into the drawing head (1) via the glass inlet (2).

10. Process according to any one of claims 8 to 9, **characterized in that** a process temperature of the glass melt in the drawing head (1) is substantially set, preferably controlled, by electrical heating of the noble metal lining of the drawing head (1).

11. Process according to any one of claims 8 to 10, wherein a filling height of the glass melt $h_{melt}$ between a glass melt level (6) and a central axis of the glass inlet (2) is set such that a ratio $h_{melt}/h$ of at least 0.1/1, or at least 0.2/1 is provided, with the proviso that the glass melt level (6) is between $h$ - 100 mm and $h$, with respect to the total height h of the drawing head (1).

12. Glass tube, in particular produced or producible by a process according to any one of claims 8 to 11, wherein for any rotational position of a 3 mm thick glass tube sample in a chromatic confocal thickness measurement both the outer surface line profile and the inner surface line profile have a maximum 2D slope angle of less than 20,000 arcsec and/or a maximum total wavefront error of less than 25 $\mu$m based on measuring cursors having a width of 360 $\mu$m shifted along the entire length of the outer surface line profile and of the inner surface line profile in increments of 180 $\mu$m, wherein both the outer surface line profile and the inner surface line profile have a length of 4500 $\mu$m.

13. Glass tube according to claim 12, wherein the glass tube has an outer diameter in a range of from 15.0 to 85.0 mm and/or an inner diameter in a range of from 12.5 to 75 mm.

14. Glass tube according to any one of claims 12 to 13, wherein the ratio of outer diameter and inner diameter of the glass tube is in a range of from 1.05 to 1.75.

15. Glass tube according to any one of claims 12 to 14, wherein the glass tube has a wall thickness in a range of from 0.5 to 15 mm.

**Figure 1**

Figure 2a

Figure 2b

Figure 3a

Figure 3b

**Figure 4a**

**Figure 4b**

Figure 5a

Figure 5b

Figure 6a

Figure 6b

Figure 6c

EP 4 574 781 A1

Figure 7a

Figure 7b

Figure 7c

29

Figure 8

Figure 9

Figure 10

Figure 11

Figure 12

Europäisches Patentamt

European Patent Office

Office européen des brevets

# EUROPEAN SEARCH REPORT

**Application Number**

EP 24 21 7819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 255 864 A (CDGM OPTICAL GLASS CO LTD) 20 September 2019 (2019-09-20) | 1-8,10, 12-15 | INV. C03B17/04 |
| Y | * paragraph [0057]; claim 1; figure 4 * | 9 | |
| A | | 11 | |
| | ----- | | |
| X | DE 101 27 142 C1 (SCHOTT GLAS [DE]) 7 November 2002 (2002-11-07) | 12-15 | |
| Y | * paragraph [0015] * | 9 | |
| | ----- | | |

**TECHNICAL FIELDS SEARCHED (IPC)**

C03B

The present search report has been drawn up for all claims

| Place of search | Date of completion of the search | Examiner |
|---|---|---|
| The Hague | 14 April 2025 | Flügel, Alexander |

EPO FORM 1503 03.82 (P04C01)

## ANNEX TO THE EUROPEAN SEARCH REPORT
## ON EUROPEAN PATENT APPLICATION NO.

EP 24 21 7819

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | | Publication date | Patent family member(s) | | Publication date |
|---|---|---|---|---|---|
| CN 110255864 | A | 20-09-2019 | NONE | | |
| DE 10127142 | C1 | 07-11-2002 | DE | 10127142 C1 | 07-11-2002 |
| | | | US | 2002178753 A1 | 05-12-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102008009811 A1
- US 20170320766 A1
- US 20170341966 A1